(19) Europäisches Patentamt
European Patent Office
Office européen des brevets

(11)  **EP 3 230 593 B1**

(12)  **EUROPÄISCHE PATENTSCHRIFT**

(45) Veröffentlichungstag und Bekanntmachung des Hinweises auf die Patenterteilung:
**04.05.2022   Patentblatt 2022/18**

(21) Anmeldenummer: **15794819.1**

(22) Anmeldetag: **22.10.2015**

(51) Internationale Patentklassifikation (IPC):
**F04D 15/00** *(2006.01)*      **F24D 19/10** *(2006.01)*

(52) Gemeinsame Patentklassifikation (CPC):
**F04D 15/0066; F24D 19/1012;** F24D 2220/0207; Y02B 30/70

(86) Internationale Anmeldenummer:
**PCT/EP2015/002089**

(87) Internationale Veröffentlichungsnummer:
**WO 2016/091342 (16.06.2016 Gazette 2016/24)**

(54)  **ANPASSUNG DER FÖRDERHÖHE EINER KREISELPUMPE AN EINEN SICH ÄNDERNDEN VOLUMENSTROM**

ADAPTATION OF THE HEAD OF A CENTRIFUGAL PUMP TO A CHANGING VOLUME FLOW

ADAPTATION DE LA PRESSION DE DÉCHARGE D'UNE POMPE CENTRIFUGE À UN DÉBIT VARIABLE

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **08.12.2014   DE 102014018020**

(43) Veröffentlichungstag der Anmeldung:
**18.10.2017   Patentblatt 2017/42**

(73) Patentinhaber: **WILO SE**
**44263 Dortmund (DE)**

(72) Erfinder:
 • **OPPERMANN, Jens**
   **58239 Schwerte (DE)**
 • **CONSTANTIN, Ana**
   **52066 Aachen (DE)**

(74) Vertreter: **Cohausz Hannig Borkowski Wißgott Patentanwaltskanzlei GbR**
**Schumannstraße 97-99**
**40237 Düsseldorf (DE)**

(56) Entgegenhaltungen:
**DE-A1-102011 012 211**

EP 3 230 593 B1

**Beschreibung**

Die vorliegende Erfindung betrifft ein Verfahren zum Betreiben einer elektromotorisch angetriebenen Kreiselpumpe in einem hydraulischen System, insbesondere einer Heizungspumpe, mit wenigstens einem selbstgeregelten Verbraucher, bei dem ein Gradienten des Volumenstroms der Kreiselpumpe ermittelt und die aktuelle Sollförderhöhe der Kreiselpumpe aus einer mathematischen Verknüpfung des mit einem Verstärkungsfaktor gewichteten Gradienten und der zuletzt vorgegebenen Sollförderhöhe berechnet wird, wobei die Verknüpfung eine Mitkopplung zwischen Sollförderhöhe und Volumenstrom beschreibt und der Verstärkungsfaktor aus einer Berechnungsvorschrift ermittelt wird.

Ein Verfahren dieser Gattung ist aus der deutschen Patentanmeldung DE 10 2011 012 211 A1 bekannt. Hier wird die Sollförderhöhe in Abhängigkeit des Volumenstroms entlang einer einstellbaren unterlagerten Kennlinie geregelt, die durch einen Kennliniensollwert definiert ist, wobei der Kennliniensollwert erhöht wird, wenn der Volumenstrom steigt und reduziert wird, wenn der Volumenstrom sinkt. Somit wird die Kennlinie im Pumpenkennfeld ständig verschoben und eine dynamische, an den tatsächlichen Bedarf des hydraulischen Systems angepasste Regelung der Pumpe erreicht. Das Erhöhen und Reduzieren der Kennlinie erfolgt durch die Addition eines Mitkopplungswerts zum letzten Kennliniensollwert, der entsprechend positiv ist, wenn der Volumenstrom steigt und negativ ist, wenn der Volumenstrom sinkt. Die unterlagerte Kennlinie kann eine Δp-c Kennlinie sein. In diesem Fall entspricht der vorgegebene Kennliniensollwert einem Förderhöhensollwert der Pumpe, der unabhängig vom Volumenstrom konstant gehalten wird. Die unterlagerte Kennlinie kann aber auch eine Δp-v Kennlinie sein.

Der zu addierende Mitkopplungswert wird gemäß einer festen Berechnungsvorschrift während des Betriebs der Pumpe ermittelt, wobei diese Vorschrift gemäß der Offenlegungsschrift DE 10 2011 012 211 A1 durch einen linearen Zusammenhang zwischen Mittkopplungswert und Volumenstromgradient definiert sein kann. Dies bedeutet, dass der Mitkopplungswert umso größer ist, je größer die Volumenstromänderung ist. Die Berechnungsvorschrift ist in der genannten Offenlegungsschrift für den gesamten Betriebsbereich der Pumpe gleich. Zudem müssen bei dem Verfahren für einen anwendungsspezifischen Betrieb der Pumpe Grenzwerte für die unterlagerte Kennlinie betrachtet werden, die die Anwendung des Verfahrens nur in einem beschränkten Betriebsbereich des Kennfeldes der Pumpe ermöglichen.

Durch die Mitkopplung zwischen Förderhöhe und Volumenstromänderung wird eine schnelle Reaktion der Förderhöhe auf die Änderung des Volumenstroms sichergestellt, z.B. wenn in dem hydraulischen System befindliche Thermostatventile schnell öffnen oder schließen. Gleichwohl ändert sich im Regelbereich der Thermostatventile, d.h. im Teillastbereich der Pumpe, der Volumenstrom langsamer, so dass die Förderhöhe bei einer zu schwachen Mittkopplung auf einem entweder zu hohen oder zu niedrigen Wert bleiben kann. Der erstgenannte Fall würde zu keinem energieeffizienten Betrieb führen, weil die Pumpe mit ihrem zu hohen Förderdruck gegen geschlossene Ventile arbeitet. Der zweite Fall würde zu einer Unterversorgung der Verbraucher führen. Des Weiteren würde die Förderhöhe bei einer zu starken Mittkopplung sehr stark auf eine Erhöhung des Volumenstroms reagieren. Der dadurch von der Pumpe aufgebaute zusätzliche Druck würde gegen die zumindest teilweise geschlossenen Ventile drücken, die nur allmählich weiter öffnen und mehr Volumenstrom fließen lassen. Die Ventile würden dann erneut regeln und versuchen, wieder zu schließen, was zu einer Senkung des Volumenstroms und über die Mittkopplung zu einer Senkung der Sollförderhöhe führt. Dies hat wiederum zur Folge, dass sich der Volumenstrom zu stark senken würde und die Ventile diesem Trend entgegen regeln würden, indem sie öffnen. Insgesamt kommt es dann in dem hydraulischen System zu einer Schwingung der Förderhöhe, die auf den zu hohen Wert des Verstärkungsfaktors zurückzuführen ist. Mit anderen Worten ist das hydraulische System bei einem zu großen Verstärkungsfaktor anfällig gegen Schwingungen.

Für das Betreiben einer Kreiselpumpe in einem hydraulischen System unter Verwendung einer Mittkopplung zwischen der Förderhöhe und der Volumenstromänderung ist es daher erforderlich, den Mitkopplungswert, d.h. den Verstärkungsfaktor für die Mitkopplung geeignet zu wählen. Ein zu hoher Verstärkungsfaktor führt zu einer Schwingung im System, ein zu geringer Verstärkungsfaktor zu einer Unterversorgung der Verbraucher oder einem nicht energieoptimalen Betrieb. Der optimale oder ideale Verstärkungsfaktor befindet sich zwischen diesen Extremfällen. Es ist daher eine erste Teilaufgabe der vorliegenden Erfindung, eine optimale Einstellung des Verstärkungsfaktors zu erreichen. Darüber hinaus ist zu berücksichtigen, dass für unterschiedliche Zustände des hydraulischen Systems, insbesondere für unterschiedliche Lastzustände (Teillast, Volllast), unterschiedliche Verstärkungsfaktoren optimal sind. Es ist daher eine weitere Teilaufgabe der Erfindung dynamisch im Betrieb der Pumpe den optimalen Verstärkungsfaktor zu ermitteln und entsprechend einzustellen.

Eine weitere Teilaufgabe der Erfindung besteht darin, eine Regelung bereitzustellen, die für beliebige Pumpen anwendbar ist. Dabei soll die Regelung nicht nur für unterschiedliche Pumpen anwendbar sein sondern auch bei solchen Pumpen funktionieren, die nicht an das hydraulische System angepasst sondern überdimensioniert sind.

Diese Aufgaben werden durch ein Regelungsverfahren mit den Merkmalen des Anspruchs 1 gelöst. Vorteilhafte Weiterbildungen der Erfindung sind in den Unteransprüchen angegeben.

Erfindungsgemäß wird vorgeschlagen, die Berechnungsvorschrift dynamisch im Betrieb der Kreiselpumpe unter Verwendung des aktuellen Volumenstroms und der aktuellen Förderhöhe als aktuellen Betriebspunkt der Kreiselpumpe im Pumpenkennfeld und der Steilheit oder eines Punktes einer aktuellen und/oder vergangenen Anlagenkennlinie des hydraulischen Systems Da sich der aktuelle Betriebspunkt der Kreiselpumpe ständig ändert, wird auch die Berechnungsvorschrift immer wieder geändert. Gegenüber dem Stand der Technik hat das hier beschriebene Verfahren deshalb den Vorteil, dass es gänzlich ohne bauseitige, manuelle Vorgabe einer Kennlinie auskommt, weil keine klassische Regelung der Pumpe entlang einer starren Kennlinie erfolgt. Insoweit vereinfacht sich der Inbetriebnahmeprozess der Kreiselpumpe und wird zudem sicherer, da keine falsche Einstellung möglich ist.

Das erfindungsgemäße Verfahren verwendet demnach keine klassische, starre Kennlinienregelung, bei der die Förderhöhe der Kreiselpumpe in Abhängigkeit ihres Förderstroms entlang einer eingestellten festen Kennlinie geregelt wird. Dies ist üblicherweise bei Heizungspumpen realisiert und führt dazu, dass die Betriebspunkte der Pumpe im HQ-Diagramm ausschließlich auf der eingestellten Kennlinie liegen. Erfindungsgemäß wird vielmehr ein Algorithmus verwendet, der es ermöglicht, dass die Pumpe im Rahmen der Regelung einen beliebigen Betriebspunkt völlig frei im HQ-Diagramm erreichen kann und diesen auch unter energieoptimalen Gesichtspunkten je nach aktuellem Zustand des Heizungssystems einstellt.

Anstelle einer üblichen Kennlinienregelung wird eine neu berechnete Sollförderhöhe so lange gehalten, bis eine neue Sollförderhöhe berechnet worden ist. Für diese Dauer wird die Pumpe auf der konstanten Sollförderhöhe gehalten, was einer unterlagerten $\Delta$p-c Regelung entspricht. Dabei ergibt sich eine neue Sollförderhöhe nur dann, wenn sich der Volumenstrom ändert, da anderenfalls der Gradient null ist. Darüber hinaus kann eine zyklische Neuberechnung der Sollförderhöhe erfolgen. Dies bedeutet, dass das erfindungsgemäße Verfahren zyklisch wiederholt werden kann, vorzugsweise in Intervallen zwischen 3 Sekunden und 15 Minuten, insbesondere alle 30 Sekunden. Dies bedeutet auch, dass die Sollförderhöhe jedenfalls für die Dauer eines Intervalls gleich bleibt, auch wenn sich der Volumenstrom ändert. Ist dies der Fall liegt nur am Anfang eines Intervalls eine neue Sollförderhöhe vor. Die Pumpe sucht sich dabei dynamisch im Betrieb in Abhängigkeit eines sich neu einstellenden Lastzustands des hydraulischen Systems selbsttätig den jeweils energetisch optimalen Betriebspunkt.

Dabei ist lediglich noch erforderlich, einen Startwert $H_{start}$ für die Sollförderhöhe vorzugeben, der werksseitig programmiert sein kann und beispielsweise ein mittlerer Wert zwischen der bei Volumenstrom null vorliegenden maximalen Förderhöhe $H_{max}$ und minimalen Förderhöhe $H_{min}$ sein kann, wie die nachfolgende Gleichung zum Ausdruck bringt.

$$H_{start} = H_{min} + \tfrac{1}{2}\,(H_{max}\text{-}H_{min}).$$

Des Weiteren hat das erfindungsgemäße Verfahren den Vorteil, dass es im gesamten Pumpenkennfeld angewendet werden kann und nicht nur innerhalb bestimmter Grenzen.

Das Verfahren findet bevorzugt bei einer Heizungspumpe oder Kühlpumpe Anwendung. Das hydraulische System kann folglich vorzugsweise ein Heizungssystem oder ein Kühlsystem oder ein kombiniertes Heiz-/ Kühlsystem sein.

Das hydraulische System umfasst zumindest einen selbstgeregelten Verbraucher. Es kann es grundsätzlich auch zwei oder mehr insbesondere eine Vielzahl Verbraucher aufweisen. Verbraucher können beispielsweise Heizkörper oder Heizkreise einer Fußbodenheizung oder Kühlkörper oder Kühlzonen einer Deckenkühlung sein. Zumindest einer der zwei oder mehr Verbraucher ist dann selbstgeregelt. Es können aber auch zwei oder mehr der Verbraucher selbstgeregelt sein. Allerdings müssen nicht alle Verbraucher unbedingt selbstgeregelt und auch nicht unbedingt geregelt sein. Unter Selbstregelung ist in diesem Zusammenhang zu verstehen, dass dem entsprechenden Verbraucher ein Stellglied zugeordnet ist, das den Volumenstrom durch den Verbraucher selbsttätig regelt, wobei die Regelung beispielsweise auf eine bestimmte Solltemperatur gerichtet sein kann. Das Stellglied ist im Vorlauf oder Rücklauf des Verbrauchers angebracht. Bei einem solchen Stellglied kann es sich beispielsweise um ein Thermostat, ein Motorventil oder ein elektrothermisches Stellventil handeln.

Der Zustand des hydraulischen Systems kann durch den Zustand des einen oder der mehreren sich selbst regelnden Verbraucher bzw. durch den Zustand des Stellglieds bzw. der Stellglieder beschrieben werden. Je nach Öffnungsgrad der Stellglieder im Falle von Ventilen verursachen die Stellglieder jeweils einen hydraulischen Widerstand, der sich am Ort der Kreiselpumpe als ein Gesamtwiderstand ausdrückt und durch eine Anlagenkennlinie $H_A(Q)$ beschrieben werden kann, die eine mathematische Abhängigkeit der Förderhöhe H vom Volumenstrom A beschreibt. Der Zustand des hydraulischen Systems kann zum Beispiel durch die Steilheit der Anlagenkennlinie beschrieben werden. Er kann aber auch bereits durch einen einzigen Punkt auf der Anlagenkennlinie beschrieben werden, da eine mathematische Darstellung der Anlagenkennlinie in der Regel bekannt ist. Hier eignen sich verschiedene Punkte, wie nachfolgend noch erläutert wird.

Gemäß einer bevorzugten Ausführungsvariante ist die mathematische Verknüpfung die Addition des mit dem Verstärkungsfaktor gewichteten Gradienten zu der zuletzt vorgegebenen Sollförderhöhe. Der Verstärkungsfaktor ist dabei stets positiv. Dies realisiert eine Mitkopplung, da die Sollförderhöhe erhöht wird, wenn der Volumenstrom steigt und reduziert wird, wenn der Volumenstrom sinkt. Es sei angemerkt, dass eine derartige Mitkopplung natürlich auch durch eine Subtraktion anstelle der Addition unter Verwendung eines negativen Verstärkungsfaktors erreicht wird. Da dies aber im Ergebnis auch einer Addition entspricht, wird dies nicht als echte Alternative betrachtet.

Mit dem erfindungsgemäßen Verfahren wird nicht nur vorgeschlagen, die Berechnungsvorschrift für den Verstärkungsfaktor in Abhängigkeit des Zustands des hydraulischen Systems anzupassen. Vielmehr wird auch eine geeignete Berechnungsvorschrift vorgeschlagen.

So ist es beispielsweise von Vorteil, wenn die Berechnungsvorschrift einen funktionalen Zusammenhang zwischen dem aktuellen Betriebspunkt und einem Zielpunkt beschreibt und der Verstärkungsfaktor aus diesem funktionalen Zusammenhang berechnet wird. Geeigneterweise wird hierfür der aktuelle Betriebspunkt der Kreiselpumpe zunächst ermittelt.

Eine Grundüberlegung für die Bildung der Berechnungsvorschrift geht von der Betrachtung zweier Extremfälle aus, die den Zustand bzw. die Zustandsänderung des hydraulischen Systems bzw. der die Verbraucher regelnden Stellglieder betreffen sowie eine entsprechende Reaktion der Förderhöhe auf diesen Zustand bzw. Zustandswechsel betreffen.

Dabei ist ein erster Extremfall derjenige, bei dem der hydraulische Widerstand des hydraulischen Systems minimal ist, ein zweiter Extremfall derjenige, bei dem der Widerstand maximal ist. Minimal ist der Widerstand, wenn z.B. alle Ventile geöffnet, maximal, wenn z.B. alle Ventile geschlossen sind. Öffnen alle Ventile, muss die Kreiselpumpe die angeforderte Leistung auch bedienen können. Um dieser Anforderung gerecht zu werden, wird sich der aktuelle Betriebspunkt der Kreiselpumpe in Richtung einer maximalen Pumpenkurve verändern. Gleichwohl liegt der Auslegungspunkt der Pumpe für maximale Last regelmäßig unterhalb der maximalen Pumpenkurve, um Stellreserve zu erhalten. Bei der maximalen Pumpenkurve läuft die Kreiselpumpe in der Regel mit einer maximalen Drehzahl, so dass die maximale Pumpenkurve das Kennfeld der Pumpe in Richtung eines steigenden Förderstroms und/ oder einer steigenden Förderhöhe begrenzt.

Die maximale Drehzahl kann z.B. diejenige Drehzahl sein, mit der die Pumpe im Dauerbetrieb unter mechanischen bzw. hydromechanischen Gesichtspunkten tatsächlich betrieben werden kann. Es besteht aber auch die Möglichkeit, dass eine Leistungsbegrenzung in der Pumpe realisiert ist, die eine gegenüber dieser maximalen Drehzahl geringere Drehzahl als Maximaldrehzahl vorgibt, wenn eine bestimmte elektrische Maximalleistung im Vollastfall überschritten wird. Dies führt dazu, dass die maximale Pumpenkurve dort, wo die Leistungsbegrenzung einsetzt, abgeflacht ist und annähernd eine Gerade bildet.

Eine schnelle Reaktion auf den ersten Extremfall wäre energetisch ineffizient, weil es zu einem Überschwingen kommen kann, eine langsamere Reaktion könnte zu Unterversorgung führen. Eine ideale Reaktion liegt folglich dazwischen.

Sind alle Ventile geschlossen, wird die Pumpe mit minimaler Drehzahl fahren, d.h. einen Betriebspunkt auf oder nahe der minimalen Pumpenkurve haben. Schließen die Ventile, wird ein solcher Betriebspunkt In Richtung oder sogar auf der minimalen Pumpenkurve entsprechend angestrebt. Eine schnellere Reaktion könnte in diesem Fall zur Unterversorgung der Verbraucher führen, eine langsamere wäre energetisch ineffizient. Auch hier liegt eine ideale Reaktion dazwischen.

Aus dieser Betrachtung folgt die Erkenntnis, dass für die Berechnung eines idealen Verstärkungsfaktors K, wie zuvor genannt, ein Zielpunkt verwendet werden kann, in dessen Richtung eine Änderung des Betriebszustands der Kreiselpumpe gerichtet ist. Unter einem Zielpunkt wird folglich ein solcher Punkt verstanden, der mit denselben physikalischen Größen wie ein Betriebspunkt der Kreiselpumpe beschrieben werden und insbesondere im HQ-Diagramm dargestellt werden kann.

Idealerweise definiert der Zielpunkt das Ziel, quasi einen Endzustand für die Änderung des Betriebszustands der Kreiselpumpe. Der Zielpunkt kann daher auf der maximalen Pumpenkurve oder auf der minimalen Pumpenkurve liegen. Der Zielpunkt muss aber nicht unbedingt auf der maximalen oder minimalen Pumpenkurve liegen. So kann er beispielsweise, da er im Wesentlichen eine mathematische Bedeutung hat, möglicherweise außerhalb des Pumpenkennfeldes liegen, insbesondere jenseits der maximalen oder der minimalen Pumpenkurve liegen. Der Zielpunkt kann sogar zu einem negativen Volumenstrom gehören. Ferner kann der Zielpunkt im Falle einer verwendeten Leistungsbegrenzung auf einer gegenüber der maximalen Pumpenkurve abgeflachten Kurve liegen. Diese Kurve kann außerhalb der eingreifenden Leistungsbegrenzung der maximalen Pumpenkurve und während der eingreifenden Leistungsbegrenzung einer das Kennfeld begrenzenden Gerade entsprechen, die diejenigen Betriebspunkte abschneidet, bei denen ein bestimmter Leistungsgrenzwert überschritten wird.

Für den idealen Verstärkungsfaktor K kommt es darauf an, von welchem Betriebspunkt aus sich die Kreiselpumpe dem Endzustand im ersten oder zweiten Extremfall nähert. Ist der aktuelle Betriebspunkt nahe dem Endzustand, ist nur eine geringe Reaktion auf die Zustandsänderung des Systems erforderlich. Anderenfalls empfiehlt es sich, den Verstärkungsfaktor größer zu wählen. Aus diesem Grunde ist es von Vorteil, in der Berechnungsvorschrift den aktuellen Betriebspunkt der Kreiselpumpe zu berücksichtigen.

Ausgehend von der Verwendung eines Zielpunktes zur Bestimmung des Verstärkungsfaktors wird gemäß einer vorteilhaften Ausführungsvariante die Steigung einer Peilgeraden zwischen dem aktuellen Betriebspunkt und dem Zielpunkt ermittelt und als Verstärkungsfaktor verwendet. Diese Peilgerade stellt in gewisser Weise auch eine Kennlinie dar, jedoch wird die Kreiselpumpe nicht entlang dieser Kennlinie im Sinne einer Δp-v Regelung geregelt. Denn zum einen wird die Kennlinie immer wieder in ihrer Steigung deshalb verändert, weil sich der aktuelle Betriebspunkt der Kreiselpumpe ändert, zum anderen bleibt die Sollförderhöhe im Falle einer zyklischen Neuberechnung für die Dauer eines Zyklus jedenfalls gleich, so dass die Kreiselpumpe allenfalls in Stufen von die Peilgerade approximierenden Δp-c Kennlinien entlang der Peilgeraden geregelt wird.

Untersuchungen haben gezeigt, dass der ideale Verstärkungsfaktor bei sich öffnenden Ventilen, d.h. bei zunehmendem Volumenstrom, anders ist gegenüber dem idealen Verstärkungsfaktor bei sich schließenden Ventilen, d.h. bei abnehmendem Volumenstrom. Es ist daher von Vorteil, für Änderungen des Volumenstroms nach oben und nach unten unterschiedliche Zielpunkte, folglich unterschiedliche Peilgeraden und somit verschiedenen Werte für den Verstärkungsfaktor zu verwenden. Im Falle von gleichen Werten, befinden sich die Systemzustände für das Öffnen und Schließen der Ventile auf derselben Peilgeraden, solange jedenfalls keine Bewegung auf der maximalen Pumpenkurve vorliegt. In diesem Fall findet eine Parallelverschiebung der Peilgeraden für das Öffnen und Schließen der Ventile statt.

Im Falle des dargestellten ersten Extremfalls muss die Kreiselpumpe eine erhöhte Leistungsforderung decken. Damit es nicht zur Unterversorgung kommt, muss die Kreiselpumpe während der Volumenstromzunahme aufgrund der sich öffnenden Ventile ihre Leistung bzw. ihre Drehzahl erhöhen. Sie strebt damit einen Betriebszustand oberhalb des aktuellen Betriebspunktes an. Vorzugsweise ist daher der Zielpunkt im Falle eines positiven Gradienten ein oberer Zielpunkt, der durch einen Volumenstrom größer als der Volumenstrom des aktuellen Betriebspunktes gekennzeichnet ist. Vorzugsweise ist auch die Förderhöhe im oberen Zielpunkt größer als die Förderhöhe des aktuellen Betriebspunktes. Betrachtet man den aktuellen Betriebspunkt als Ursprung eines kartesischen Koordinatensystems, liegt der obere Zielpunkt in diesem Fall im ersten Quadranten. Dies muss jedoch nicht zwingend der Fall sein, wie nachfolgend noch dargestellt ist. So kann der Zielpunkt auch im vierten Quadranten liegen. Dies ist der Fall, wenn im oberen Zielpunkt zwar der Volumenstrom größer ist, als bei dem aktuellen Betriebspunkt, jedoch die Förderhöhe kleiner ist, als die des aktuellen Betriebspunktes. In diesem Fall würden allerdings die Steigung der Peilgeraden und damit der Verstärkungsfaktor negativ sein. Um diesen Fall abzufangen, kann der berechnete Verstärkungsfaktor auf einen Minimalwert von null begrenzt werden. In diesem Fall bleibt die Sollförderhöhe unverändert.

Im Falle des dargestellten zweiten Extremfalls kann die Kreiselpumpe ihre Leistung reduzieren, um nicht gegen geschlossene Ventile zu arbeiten und um Energie zu sparen. Sie strebt damit idealerweise einen Betriebszustand unterhalb des aktuellen Betriebspunktes an. Vorzugsweise ist daher der Zielpunkt bei einem negativen Gradienten ein unterer Zielpunkt, der durch einen Volumenstrom kleiner als der aktuelle Volumenstrom gekennzeichnet ist. Vorzugsweise ist auch die Förderhöhe im unteren Zielpunkt kleiner als die Förderhöhe des aktuellen Betriebspunktes. Betrachtet man den aktuellen Betriebspunkt als Ursprung eines kartesischen Koordinatensystems, liegt der untere Zielpunkt in diesem Fall im dritten Quadranten. Dies muss jedoch nicht zwingend der Fall sein. So kann der Zielpunkt auch im zweiten Quadranten liegen. Dies ist der Fall, wenn im unteren Zielpunkt zwar der Volumenstrom kleiner ist, als bei dem aktuellen Betriebspunkt, jedoch die Förderhöhe größer ist, als die des aktuellen Betriebspunktes. Auch in diesem Fall würden allerdings die Steigung der Peilgeraden und damit der Verstärkungsfaktor negativ sein. Auch hier kann, um diesen Fall abzufangen, der berechnete Verstärkungsfaktor auf einen Minimalwert von null begrenzt werden. In diesem Fall bleibt die Sollförderhöhe unverändert.

Wie dargestellt, strebt die Kreiselpumpe bei sich schließenden Ventilen und bei sich öffnenden Ventilen unterschiedliche Endzustände an, so dass es sinnvoll ist, jeweils einen Zielpunkt für eine der beiden Richtungen zu verwenden, in die sich der Volumenstrom ändern kann. Es ergibt sich dann entweder die Peilgerade zu dem oberen Zielpunkt oder die Peilgerade zu dem unteren Zielpunkt.

Verfahrenstechnisch kann dann der Verstärkungsfaktor entweder aus der Steigung der einen oder der anderen Peilgeraden berechnet werden, je nachdem in welche Richtung sich der Zustand des hydraulischen Systems ändert.

Es ist aber alternativ verfahrenstechnisch auch möglich, stets beide Zielpunkte zu berücksichtigen und die Steigungen beider Peilgeraden auszuwerten. Dies bedeutet, dass auch stets zwei Verstärkungsfaktoren, einer aus jeweils einer der beiden Peilgeraden, berechnet werden. So kann ein erster Verstärkungsfaktor ermittelt werden, der der Steigung einer ersten Peilgeraden zwischen dem aktuellen Betriebspunkt und dem oberen Zielpunkt entspricht, und ein zweiter Verstärkungsfaktor ermittelt werden, der der Steigung einer zweiten Peilgeraden zwischen dem aktuellen Betriebspunkt und dem unteren Zielpunkt entspricht, wobei der erste Verstärkungsfaktor bei einem positiven Gradienten und der zweite Verstärkungsfaktor bei einem negativen Gradienten verwendet wird. Diese Verfahrensvariante unterscheidet sich von der zuvor beschriebenen Variante folglich unter anderem darin, dass die Fallunterscheidung bezüglich des Vorzeichens des Gradienten erst nach der Berechnung der Verstärkungsfaktoren erfolgt. Ein Vorteil dieser Variante besteht darin, dass die Verstärkungsfaktoren unmittelbar zur Verfügung stehen, wenn der Gradient respektive sein Vorzeichen bekannt ist. Gleichwohl müssen hier immer zwei Verstärkungsfaktoren berechnet werden, wodurch der Rechenaufwand doppelt so groß ist.

Um in der Berechnungsvorschrift den aktuellen oder zukünftigen Zustand des hydraulischen Systems zu berücksichtigen, kann die aktuelle und/ oder eine vergangene Anlagenkennlinie des hydraulischen Systems ermittelt und ein Punkt auf dieser Anlagenkennlinie bestimmt werden, welcher den oberen Zielpunkt bildet.

Im Hinblick auf den ersten Extremfall hat sich als besonders vorteilhaft herausgestellt, wenn der obere Zielpunkt der Schnittpunkt zwischen der aktuellen oder einer vergangenen Anlagenkennlinie und der maximalen Pumpenkurve der Kreiselpumpe ist. Entsprechend kann zunächst dieser Schnittpunkt ermittelt und als oberer Zielpunkt verwendet werden. Dies bedeutet, dass der obere Zielpunkt nicht nur auf der Anlagenkennlinie sondern auch auf der maximalen Pumpenkurve liegt. Dies ist jedenfalls dann von Vorteil, wenn es sich bei dem oberen Zielpunkt gleichzeitig um einen echten Betriebspunkt handelt, d.h. einen solchen Punkt, der von der Kreiselpumpe erreicht werden kann bzw. in der konkreten Anwendung der Kreiselpumpe im hydraulischen System auch tatsächlich erreicht wird. Dies ist jedoch nicht unbedingt der Fall.

Beispielsweise könnte die Kreiselpumpe für die Anwendung im hydraulischen System überdimensioniert sein, so dass sie niemals einen Betriebspunkt auf der maximalen Pumpenkurve erreicht. In diesem Fall ist es sinnvoll, wenn nicht der Schnittpunkt der Anlagenkennlinie mit der maximalen Pumpenkurve sondern mit einer darunter liegenden Pumpenkurve ermittelt wird, d.h. bei der eine bestimmte Drehzahl kleiner als die Maximaldrehzahl vorliegt. Diese bestimmte Drehzahl ist dann vorteilhafterweise diejenige größte Drehzahl, die die überdimensionierte Pumpe auch tatsächlich fahren würde.

Es kann daher vorgesehen sein, dass die Kreiselpumpe ihre Maximaldrehzahl für einen bestimmten Zeitraum überwacht und zunächst der Schnittpunkt mit der maximalen Pumpenkurve als oberer Zielpunkt verwendet wird, jedoch am Ende des Zeitraums geprüft wird, welche größte Drehzahl die Kreiselpumpe gefahren ist, und dann der Schnittpunkt der dieser größten Drehzahl zugeordnete Pumpenkurve mit der aktuellen oder einer vergangenen Anlagenkennlinie ermittelt und als oberer Zielpunkt verwendet wird. Der obere Zielpunkt wird dadurch nach unten verschoben.

Gemäß einer anderen vorteilhaften Weiterbildung ist die vergangene Anlagenkennlinie diejenige, die innerhalb eines vergangenen Bezugszeitraums am flachsten ist. Die flachste Anlagenkennlinie ist diejenige mit der geringsten Steigung. Wird die Anlagenkennlinie beispielsweise mathematisch als Parabel in der Art $H_A = k \cdot Q$ beschrieben, besitzt die flachste Anlagenkennlinie $H_A$ den kleinsten Koeffizienten k. Diese gehört zu einem Systemzustand mit am weitesten geöffneten Ventilen im hydraulischen System.

Für die erfindungsgemäße Regelung bedeutet dies, dass als oberer Zielpunkt derjenige Schnittpunkt zwischen einer vergangenen Anlagenkennlinie des hydraulischen Systems eines vorgegebenen Bezugszeitraums und einer Pumpenkurve der Kreiselpumpe verwendet wird, bei dem der größte Volumenstrom vorliegt. Hierdurch wird erreicht, dass der obere Zielpunkt in einem Vollastfall liegt. Der Vollastfall kann je nach Jahreszeit und Nutzungsumfang des hydraulischen Systems unterschiedlich sein. So müssen beispielsweise nicht immer alle Verbraucher tatsächlich genutzt sein. Verbraucher können in selten genutzten Räumen, wie Gästezimmern oder Abstellkammern, angeordnet sind. Während Nutzung aller Verbraucher einen globalen Vollastfall darstellt, ist gleichwohl die Nutzung sämtlicher anderer Verbraucher außer den selten genutzten Verbrauchern ein relativer Vollastfall, der jedenfalls bezogen auf einen bestimmten Bezugszeitraum den größten Energiebedarf, insbesondere Wärmebedarf fordert.

Um den relativen oder absoluten Vollastfall zu erkennen, ist die Beobachtung der Anlagenkennlinie über den genannten Bezugszeitraum erforderlich.

Je nach hydraulischem System kann der Bezugszeitraum größer oder kleiner sein. Im Falle eines Heizungs- oder Kühlsystems wiederholen sich die Heiz- bzw. Kühlvorgänge aufgrund des Alltags des bzw. der Nutzer täglich. Es werden daher alle 24 Stunden annähernd dieselben Zustände im hydraulischen System angefahren. Aus diesem Grunde kann der Bezugszeitraum geeigneterweise 24 Stunden entsprechen. Der Bezugszeitraum kann jedoch auch kleiner oder größer gewählt werden und beispielsweise zwischen 12 und 48 Stunden betragen. Mit einem kleineren Bezugszeitraum von beispielsweise 12 Stunden können für den Tag und die Nacht unterschiedliche flachste Anlagenkennlinien verwendet werden. Des Weiteren kann mit einem größeren Bezugszeitraum von beispielsweise 48 Stunden die flachste Anlagenkennlinie über zwei Tage ermittelt werden, beispielsweise über ein Wochenende, in dem ein anderes Heizverhalten vorliegen kann.

Vorzugsweise wird ein gleitender Bezugszeitraum verwendet. Dies hat den Vorteil, dass Sprünge bei der Erfassung der flachsten Anlagenkennlinie vermieden werden. Denn alternativ könnte am Ende des Bezugszeitraums das Wissen über die zuvor ermittelten Anlagenkennlinien, das gegebenenfalls in einem Speicher gespeichert ist, gelöscht werden. Dies bedeutet dann jedoch, dass jegliches Wissen weg ist und das Verfahren erneut beginnen muss, eine Anlagenkennlinie zu ermitteln, insbesondere die Flachste heraus zu finden. Dies wird durch die Verwendung eines gleitenden Bezugszeitraums verhindert, da zu jedem Zeitpunkt die flachste Anlagenkennlinie des Bezugszeitraums, der zu diesem Zeitpunkt gerade endet, bekannt ist.

Um die flachste Anlagenkennlinie zu erkennen, kann wiederholt die aktuelle Anlagenkennlinie des hydraulischen Systems ermittelt und aus der Menge ermittelter Anlagenkennlinien dann die flachste Anlagenkennlinie bestimmt werden. Es versteht sich von selbst, dass eine ermittelte aktuelle Anlagenkennlinie zu einer vergangenen Anlagenkennlinie wird, sobald eine neue aktuelle Anlagenkennlinie ermittelt worden ist.

Die Bestimmung einer Anlagenkennlinie ist im Stand der Technik an sich bekannt. So kann beispielsweise eine mathematische Beschreibung der Anlagenkennlinie zugrunde gelegt, und die darin enthaltenen Koeffizienten berechnet werden. Für ein hydraulisches System kann im einfachsten Fall eine Parabelgleichung $H_A = k \cdot Q^2 + c_x$ angesetzt

werden. Im Falle eines Heizungs- oder Kühlsystems liegt keine geodätische Höhe vor, so dass $c_x = 0$ ist, sofern kein Rückflussverhinderer existiert. Es muss dann nur der Koeffizient k der Parabel bestimmt werden, was leicht aus den bekannten Werten für den Förderstrom Q und die Förderhöhe in einem Betriebspunkt der Kreiselpumpe anhand $k = Q^2/H_A$ möglich ist. Ist in dem hydraulischen System jedoch ein Rückflussverhinderer vorhanden, so ist $c_x$ von null verschieden, da der Öffnungsdruck des Rückflusverhinderers überwunden werden muss, damit ein Förderstrom größer null vorliegen kann. In diesem Fall sind zwei Parameter k und $c_x$ zu bestimmen, was leicht aus zwei Betriebspunkten der Kreiselpumpe möglich ist.

Um nun aus den jeweils ermittelten aktuellen Anlagenkennlinien die flachste zu ermitteln, kann der Koeffizient k jeder Anlagenkennlinie abgespeichert werden und anschließend aus der Menge abgespeicherter Werte der minimale Wert für k ermittelt werden, wobei dann diejenige Anlagenkennlinie die flachste ist, zu welcher der Parameter k mit dem minimalen Wert gehört. Als oberer Zielpunkt kann dann vorteilhafterweise der Schnittpunkt zwischen dieser flachsten Anlagenkennlinie und einer Pumpenkurve insbesondere der maximalen Pumpenkurve der Kreiselpumpe (Kennlinie bei maximaler Drehzahl) verwendet werden.

Sofern mittels der flachsten Anlagenkennlinie ein geeigneter oberer Zielpunkt auf einer Pumpenkurve gefunden werden soll, kann alternativ zur Abspeicherung des Koeffizienten k sogleich aus einer ermittelten aktuellen Anlagenkennlinie deren Schnittpunkt mit der Pumpenkurve, insbesondere der maximalen Pumpenkurve ermittelt werden. Hierbei ist dann der Volumenstrom in diesem Schnittpunkt von Bedeutung. Dieser Volumenstrom kann abgespeichert und anschließend aus der Menge abgespeicherter Werte derjenige Volumenstrom ermittelt werden, der am größten ist. Denn dieser Volumenstrom gehört zu dem Schnittpunkt der entsprechenden Pumpenkurve mit der flachsten Anlagenkennlinie, da die Anlagenkennlinie mit zunehmendem Volumenstrom monoton steigend und die Pumpenkurve monoton fallen ist.

Die Bestimmung des Schnittpunktes zwischen der Anlagenennlinie und einer Pumpenkurve ist dem Fachmann geläufig und kann beispielsweise durch Gleichsetzen der Anlagenkennlinie mit der Pumpenkurve erfolgen. Herstellerseitig werden zu einer Kreiselpumpe in der Regel eine Vielzahl an Pumpenkurven angegeben, da sie das Pumpenkennfeld beschreiben. Dies erfolgt in einem HQ-Diagramm, woraus dann eine die entsprechende Pumpenkurve beschreibende mathematische Gleichung ermittelt werden kann und/ oder sogleich in Gestalt einer solchen mathematischen Gleichung, beispielsweise einer quadratischen Potenzreihe $H(Q, n) = aQ^2 + n \cdot b \cdot Q + n^2 \cdot c$, die einem Förderstrom Q und einer Drehzahl n eine Förderhöhe H zuordnet. Die Koeffizienten a, b, c werden vom Hersteller angegeben. Der Volumenstrom Q im Schnittpunkt ergibt sich aus der positiven Lösung der quadratischen Gleichung

$$0 = Q^2 + n \cdot b/(a-k) \cdot Q + n^2 \cdot (c-c_x)/(a-k).$$

Die entsprechende Förderhöhe im Schnittpunkt kann durch Einsetzen des Volumenstroms in die Gleichung der Anlagenkennlinie oder die Pumpenkurve ermittelt werde.

Alternativ zur Gleichsetzen der Anlagenkennlinie mit der Pumpenkurve kann beispielsweise das SPLINE-Verfahren verwendet werden, bei dem der Schnittpunkt iterativ aus einer "Punktewolke" von Betriebspunkten, die ein hinterlegtes Kennfeld mit Messdaten bildet, ermittelt werden.

Wie zuvor erläutert kann die flachste Anlagenkennlinie bezogen auf einen globalen Vollastfall absolut oder bezogen auf einen lokalen Vollastfall relativ angegeben werden. "Relativ" bedeutet hier, dass die flachste Anlagenkennlinie nur innerhalb des Bezugszeitraums die Flachste ist, es jedoch außerhalb des Bezugszeitraums möglicherweise eine andere Anlagenkennlinie gibt, die noch flacher ist und absolut die flachste Anlagenkennlinie bildet. Die relativ gesehen flachste Anlagenkennlinie ist folglich nur für einen bestimmten Bezugszeitraum gültig. Nach Ablauf dieses Bezugszeitraums wird die flachste Anlagenkennlinie für einen neuen Bezugszeitraum ermittelt.

Dabei ist es möglich, dass ein vorheriger und ein neuer Bezugszeitraum überlappungsfrei aufeinander folgen, oder dass, wie oben bereits erwähnt, ein gleitender Bezugszeitraum verwendet wird, bei dem der neue Bezugszeitraum den vorherigen Bezugszeitraum überlappt. Im Fall überlappungsfreier Bezugszeiträume wird am Anfang eines neuen Bezugszeitraums oder am Ende des letzten Bezugszeitraums ein Reset der "flachsten" Anlagenkennlinie durchgeführt. Hierdurch werden alle historischen Kenntnisse über die Anlagenkennlinie gelöscht und müssen neu gewonnen werden. Anders ist dies im Falle eines gleitenden Bezugszeitraums, bei dem lediglich die älteste Anlagenkennlinie gelöscht wird, weil sie zeitlich aus dem gleitenden Bezugszeitraum herausfällt, und die aktuelle Anlagenkennlinie zu der Menge der für die Bestimmung der flachsten Anlagenkennlinie zu berücksichtigenden Anlagenkennlinien hinzugenommen wird.

Wie bereits erwähnt kann der Zielpunkt bzw. der untere Zielpunkt auf der minimalen Pumpenkurve der Kreiselpumpe liegen. Die minimale Pumpenkurve ist diejenige Kurve, die alle Betriebspunkte der Kreiselpumpe mit minimaler Drehzahl verbindet. Die minimale Drehzahl einer Pumpe ist diejenige Drehzahl, ab der sie überhaupt eine Förderhöhe oder einen Volumenstrom ungleich null erreichen kann. Da die Anlagenkennlinien des hydraulischen Systems alle in einem gemeinsamen Punkt zusammenlaufen, im Falle eines Heizungssystems in der Regel alle in den Ursprung des HQ-Diagramms, liegen die Anlagenkennlinien bei kleinen Volumenströmen nicht weit auseinander. Aus diesem Grunde kann der Zielpunkt bzw. untere Zielpunkt ein fixer Punkt auf der minimalen Pumpenkurve sein, insbesondere kann er dem bei einem Volumenstrom null auf der minimalen Pumpenkurve der Kreiselpumpe liegenden Betriebspunkts entsprechen.

Gleichwohl kann der untere Betriebspunkt im Betrieb der Kreiselpumpe auch verändert werden. Dies ist unter andrem dann sinnvoll, wenn im hydraulischen System ein Rückflussverhinder vorhanden ist. Falls es einen solchen Rückflussverhinderer im System gibt und sein Öffnungsdruck über der maximalen Förderhöhe der minimalen Pumpenkurve liegt, könnte ein unterer Zielpunkt auf der minimalen Pumpenkurve dazu führen, dass der Rückflussverhinderer schließt und nie wieder öffnet, wenn der Betriebspunkt der Kreiselpupe den unteren Zielpunkt erreicht. Denn dann liegt die Förderhöhe bzw. der von der Pumpe bei dieser Förderhöhe aufgebaute Differenzdruck unterhalb des Öffnungsdrucks des Rückflussverhinderers.

Um diesen Fall zu vermeiden, kann der untere Zielpunkt auf eine höhere Förderhöhe angehoben werden, wenn der Volumenstrom für einen bestimmten Zeitraum unter einem vorgegebenen Grenzwert liegt. Durch diesen Grenzwert kann festgestellt werden, ob ein Rückflussverhinderer vorliegt und ob sich das Verfahren aufgrund des Unterschreitens des Öffnungsdrucks dieses Rückflussverhinderer quasi "tot gefahren" hat. Der Grenzwert kann beispielsweise bei 1%, insbesondere bei 0,1% des maximalen Volumenstroms auf der maximalen Pumpenkurve liegen. Bei dem Zeitraum kann es sich beispielsweise um 2 bis 12 Stunden handeln. Ferner kann das Anheben des unteren Zielpunktes insbesondere um 2% bis 8% der maximalen Förderhöhe auf der maximalen Pumpenkurve erfolgen. Das Anheben des unteren Zielpunktes kann auch mehrmals im Betrieb der Kreiselpumpe erfolgen.

Falls der Volumenstrom also beispielsweise kleiner als 0,1 % des maximal möglichen Volumenstroms ist, wird der Zielpunkt für den Verstärkungsfaktor bei negativem Gradienten angepasst, indem der letzte Wert der dem unteren Zielpunkt zugeordneten Förderhöhe um beispielsweise 5% der maximal möglichen Förderhöhe angehoben wird.

Wie zuvor erläutert, kann der Verstärkungsfaktor gemäß einer vorteilhaften Ausführungsvariante des erfindungsgemäßen Verfahrens aus der Steigung einer Peilgeraden gewonnen werden, die im HQ-Diagramm veranschaulicht den aktuellen Betriebspunkt der Kreiselpunkt mit dem Zielpunkt verbindet. Ist der Gradient positiv, so wird eine Peilgerade zu dem oberen Zielpunkt verwendet. Ist der Gradient negativ, so wird eine Peilgerade zu dem unteren Zielpunkt verwendet. Es sei an dieser Stelle angemerkt, dass die Grundidee der Verwendung einer Peilgeraden zur Bestimmung des aktuell optimalen Verstärkungsfaktors bereits dann realisiert ist, wenn nur für eine einzige Richtung der Zustandsänderung des hydraulischen Systems, d.h. nur für positive oder nur für negative Gradienten, die Steigung der entsprechenden Peilgeraden ermittelt und als Verstärkungsfaktor verwendet wird. Es ist nicht zwingend erforderlich, das erfindungsgemäße Verfahren für positive und negative Gradienten zu verwenden. So kann es beispielsweise nur für positive oder nur für negative Gradienten verwendet werden, so dass es nur einen einzigen Verstärkungsfaktor gibt, wobei im Falle des jeweils anderen Vorzeichens des Gradienten auf eine herkömmliche Kennlinienregelung Δp-c oder Δp-v übergegangen wird. Gleichwohl ist es von Vorteil, das erfindungsgemäße Verfahren sowohl bei positivem als auch bei negativem Gradienten anzuwenden, so dass es zwei Verstärkungsfaktoren gibt, weil auf diese Weise in beide Änderungsrichtungen optimale Verstärkungsfaktoren gewählt werden können und ohne der Gefahr einer Unterversorgung energieeffizient geregelt werden kann.

Die Berechnung der Steigung der Peilgeraden im Falle eines positiven Gradienten, kann nach der Berechnungsvorschrift

$$K_{up} = \frac{H_{ZO} - H_{akt}}{Q_{ZO} - Q_{akt}}$$

erfolgen, wobei $K_{up}$ der Verstärkungsfaktor bzw. erste Verstärkungsfaktor, $H_{ZO}$ die dem oberen Zielpunkt zugeordnete Förderhöhe, $H_{akt}$ die dem aktuellen Betriebspunkt zugeordnete Förderhöhe, $Q_{ZO}$ der dem oberen Zielpunkt zugeordnete Volumenstrom, und $Q_{akt}$ der dem aktuellen Betriebspunkt zugeordnete Volumenstrom ist. Die Berechnungsvorschrift gibt das Verhältnis der Schenkellänge eines rechtwinkligen Dreiecks an, dessen Hypotenuse den aktuellen Betriebspunkt mit dem oberen Zielpunkt verbindet. Dabei sind der aktuelle Betriebspunkt und der obere Zielpunkt jeweils durch die Kombination eines Volumenstrom- und eines Förderhöhenwerts beschrieben.

In entsprechender Weise kann die Berechnung der Steigung der Peilgeraden im Falle eines negativen Gradienten, nach der Berechnungsvorschrift

$$K_{down} = \frac{H_{akt} - H_{ZU}}{Q_{akt} - Q_{ZU}}$$

erfolgen, wobei $K_{down}$ der Verstärkungsfaktor bzw. zweite Verstärkungsfaktor, $H_{ZU}$ die dem unteren Zielpunkt zugeordnete Förderhöhe, $H_{akt}$ die dem aktuellen Betriebspunkt zugeordnete Förderhöhe, $Q_{ZU}$ die dem unteren Zielpunkt zugeordnete Volumenstrom, und $Q_{akt}$ die dem aktuellen Betriebspunkt zugeordnete Volumenstrom ist. Die Berechnungsvorschrift gibt das Verhältnis der Schenkellänge eines rechtwinkligen Dreiecks an, dessen Hypotenuse den unteren Zielpunkt mit dem aktuellen Betriebspunkt verbindet. Dabei sind der aktuelle Betriebspunkt und der obere Zielpunkt jeweils durch die Kombination eines Volumenstrom- und eines Förderhöhenwerts beschrieben. Sofern der untere Zielpunkt bei der maximalen Förderhöhe $H_{max,Min}$ der minimalen Pumpenkurve liegt, gilt wegen Qzu=0

$$K_{down} = \frac{H_{akt} - H_{max,Min}}{Q_{akt}}$$

Damit das erfindungsgemäße Verfahren weitgehend robust abläuft und gegen Fehler, insbesondere etwaige Messfehler weitgehend unanfällig ist, ist es von Vorteil, Grenzwertbetrachtungen durchzuführen und dabei solche Fälle abzufangen, in denen ein ermittelter; insbesondere berechneter Wert einen oberen oder unteren Grenzwert über- bzw. unterschreitet. Denn derartige Werte sollten generell nicht zugelassen werden, da sie zur Instabilität der Regelung oder zu regelungstechnisch wenig sinnhaften Einflussnahmen führen können.

So kann gemäß einer ersten Grenzwertbetrachtung der berechnete Verstärkungsfaktor auf einen Maximalwert begrenzt werden. Ist der berechnete Verstärkungsfaktor größer als der Maximalwert, wird er folglich auf diesen Maximalwert gesetzt. Dieser entspricht vorzugsweise der Steigung einer Geraden zwischen einem unteren und einem oberen Grenzpunkt, wobei der untere Grenzpunkt auf oder unterhalb der minimalen Pumpenkurve und der obere Grenzpunkt auf oder oberhalb der maximalen Pumpenkurve der Kreiselpumpe liegen kann.

Dabei kann der obere Grenzpunkt durch den Schnittpunkt zwischen der maximalen Pumpenkurve und der steilsten Anlagenkennlinie des hydraulischen Systems gebildet sein. Die steilste Anlagenkennlinie ist Entsprechung zu der flachsten Anlagenkennlinie diejenige Anlagenkennlinie, bei der der Koeffizient k am größten ist oder bei der im Schnittpunkt mit der maximalen Pumpenkurve die höchste Förderhöhe vorliegt. Alternativ kann der obere Grenzpunkt definiert sein durch die maximale Förderhöhe auf der maximalen Pumpenkurve und 10% bis 20% des maximalen Volumenstroms auf der maximalen Pumpenkurve. In diesem Fall liegt der obere Grenzpunkt außerhalb der maximalen Pumpenkurve.

Ferner kann gemäß einer anderen Grenzwertbetrachtung der berechnete Verstärkungsfaktor auf einen Minimalwert begrenzt werden. Dieser kann beispielsweise null betragen. Es werden somit keine negativen Verstärkungsfaktoren zugelassen. Ist der berechnete Wert des Verstärkungsfaktors negativ, kann er auf den letzten nicht-negativen Wert gesetzt werden. Dies bedeutet, dass dann entlang einer $\Delta$p-c Kennlinie geregelt wird, auf der der aktuelle Betriebspunkt liegt.

Weitere Merkmale und Vorteile des erfindungsgemäßen Verfahrens werden nachfolgend anhand eines Ausführungsbeispiels erläutert. Es zeigen:

Figur 1:   Blockschaltbild der erfindungsgemäßen Regelung mit einer messtechnischen Bestimmung des aktuellen Betriebspunktes

Figur 2:   Blockschaltbild der erfindungsgemäßen Regelung mit einer rechnerischen Bestimmung des aktuellen Betriebspunktes

Figur 3:   Ablaufdiagramm zum grundlegenden Verfahrensablauf

Figur 4:   eine Ausführungsvariante mit Berechnung des oberen Zielpunktes

Figur 5:   Detaildarstellung der Ermittlung des idealen Verstärkungsfaktors

Figur 6:   zweite Ausführungsvariante mit Berechnung des oberen Zielpunktes und Detaildarstellung der Ermittlung des idealen Verstärkungsfaktors

Figur 7:   HQ-Diagramm zur Veranschaulichung des Verfahrens

Figur 8:   Ablaufdiagramm zur Bestimmung des oberen Zielpunktes

Figur 9:   HQ-Diagramm zur Veranschaulichung des oberen Zielpunkts auf der flachsten Anlagenkennlinie

Figur 10:   HQ-Diagramm zur Veranschaulichung der oberen Grenze des Verstärkungsfaktors

Figur 11:   HQ-Diagramm zur Veranschaulichung der unteren Grenze des Verstärkungsfaktors

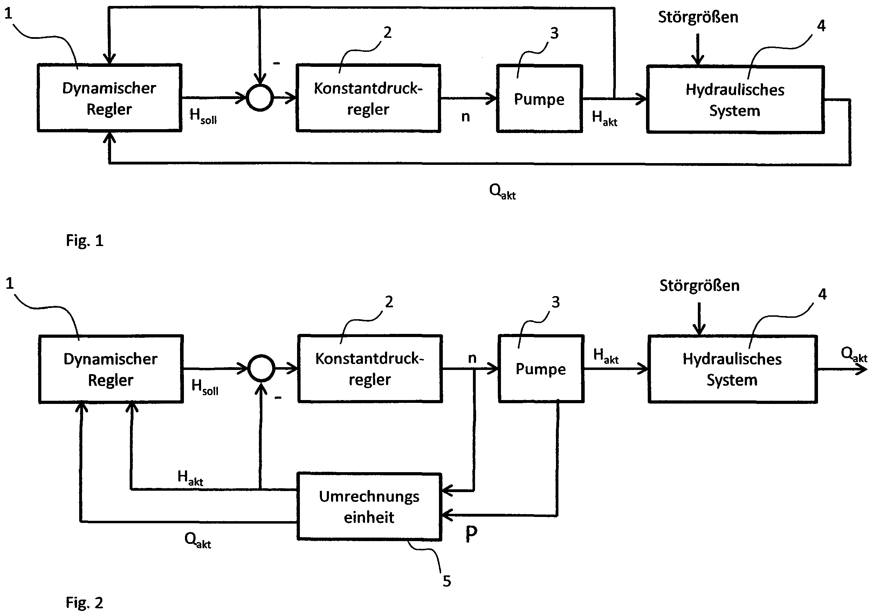

Figur 1 zeigt ein Blockschaltbild einer erfindungsgemäßen Regelung einer elektromotorisch angetriebenen Kreiselpumpe 3 in einem hydraulischen System 4. Das hydraulische System 4 kann beispielsweise ein Heizungssystem oder ein Kühlsystem sein, in dem ein Heizungs- bzw. Kühlmedium durch die Kreiselpumpe 3 von einer zentralen Wärmequelle oder Kältemaschine zu wenigstens einem, vorzugsweise zu mehreren selbstgeregelten Verbrauchern im Kreis gefördert wird. Bei den Verbrauchern kann es beispielsweise um Heizkörper und/ oder Heizkreise einer Fußbodenheizung, oder um Kühlzonen ein Deckenkühlung handeln. Ihnen ist jeweils ein Stellglied, insbesondere ein Thermostatventil, ein Motorventil oder ein elektrothermischer Stellantrieb zugeordnet, welches/ welcher den Volumenstrom durch den entsprechenden Verbraucher regelt. Nachfolgend wird bezüglich der Stellglieder von Ventilen gesprochen.

Die Kreiselpumpe 3 erzeugt zwischen ihrer Saugseite und ihrer Druckseite einen Differenzdruck $\Delta p$, der proportional zur Förderhöhe $H_{akt}$ ist und einen Volumenstrom $Q_{akt}$ im hydraulischen System 4 bewirkt. Störgrößen beeinflussen den Zustand des hydraulischen Systems 4. Darunter sind insbesondere die Ventile zu verstehen, die den hydraulischen Rohrleitungswiderstand des Systems bestimmen.

Der Kreiselpumpe 3 ist ein Regler 2 zugeordnet, der zur Erreichung einer bestimmten Sollförderhöhe $H_{soll}$ der Kreiselpumpe 3 eine bestimmte Drehzahl n vorgibt. Die Einstellung der Drehzahl n erfolgt in an sich bekannter Weise mittels eines die Kreiselpumpe 3 steuernden, nicht dargestellten Frequenzumrichters. Regler 2 und Pumpe 3 bilden einen Regelkreis, bei der die aktuelle Sollförderhöhe $H_{akt}$ auf den Reglereingang negativ rückgekoppelt ist, so dass sie bzw. er von der Sollförderhöhe $H_{soll}$ abgezogen wird, und der Regler 2 die Drehzahl n entsprechend der sich daraus ergebenden Regelabweichung korrigiert. Der Regler 2 kann als P, PI oder auch als PID-Regler ausgebildet sein.

Diese im Stand der Technik hinlänglich bekannte Anordnung wird nun durch einen erfindungsgemäßen dynamischen Regler 1 ergänzt, der in Abhängigkeit des aktuellen Betriebspunktes $B_{akt}$ und des Zustands des hydraulischen Systems 1 einen Förderhöhensollwert $H_{soll}$ ermittelt und der Drehzahlregelung vorgibt. Der aktuelle Betriebspunkt $B_{akt}$ ist hier durch den aktuellen Volumenstrom $Q_{akt}$ und die aktuelle Förderhöhe $H_{akt}$ beschrieben. Diese Größen werden dem dynamischen Regler zugeführt.

Es sei des Weiteren angemerkt, dass, soweit hier von einer Förderhöhe die Rede ist, in gleicherweise der Differenzdruck der Pumpe gemeint ist, da diese beiden Größen in einem geschlossenen System wie einem Heizungssystem durch den proportionalen Zusammenhang $H = \Delta p/ (\rho \cdot g)$ ineinander überführt werden können, wobei $\rho$ die Dichte des geförderten Mediums und g die Erdbeschleunigung ist, d.h. $\rho$ und g Konstanten sind.

Der aktuelle Volumenstrom $Q_{akt}$ kann gemessen oder berechnet werden. In Figur 1 wird der aktuelle Volumenstrom $Q_{akt}$ mittels eines Volumenstromsensors, die Förderhöhe $H_{akt}$ mittels eines Differenzdrucksensors gemessen und dem dynamischen Regler 1 zugeführt. Demgegenüber unterscheidet sich Figur 2 von Figur 1 darin, dass der aktuelle Volumenstrom $Q_{akt}$ und die aktuelle Förderhöhe $H_{akt}$ rechnerisch ermittelt werden, hier rein beispielhaft unter Auswertung der aktuellen Drehzahl n und der aktuellen Leistungsaufnahme P der Kreiselpumpe 3. Da eine Messung in der Regel nicht über den gesamten Volumenstrombereich messfehlerfrei erfolgen kann, ist eine Kombination einer Messung bei höheren Volumenströmen und einer Berechnung bei geringeren Volumenströmen sinnvoll.

Gemäß einer weiteren, nicht dargestellten Ausführungsvariante kann auch nur eine der beiden Größen Volumenstrom $Q_{akt}$ und Förderhöhe $H_{akt}$ bzw. Differenzdruck messtechnisch und die andere Größe rechnerisch ermittelt werden.

Sofern eine Berechnung durchgeführt wird, kann diese anhand zumindest eines mathematischen Modells erfolgen, beispielsweise eines Modells des elektromotorischen und/ oder hydraulischen Teils der Pumpe 3, gegebenenfalls ergänzt durch ein hydraulisches Modell des hydraulischen Systems 4. Der elektromotorische Teil der Kreiselpumpe 3 kann zum Beispiel durch ein elektrisches und ein mechanisches Modell beschrieben werden. Es sei angemerkt, dass unter einer Berechnung auch eine Schätzung zu verstehen ist. Eine solche Schätzung kann beispielsweise auf einem durch ein Modell der elektromotorischen Pumpe 3 sowie gegebenenfalls in Kombination mit einem Modell des angeschlossenen hydraulischen Systems 4 gebildeten Beobachter basieren.

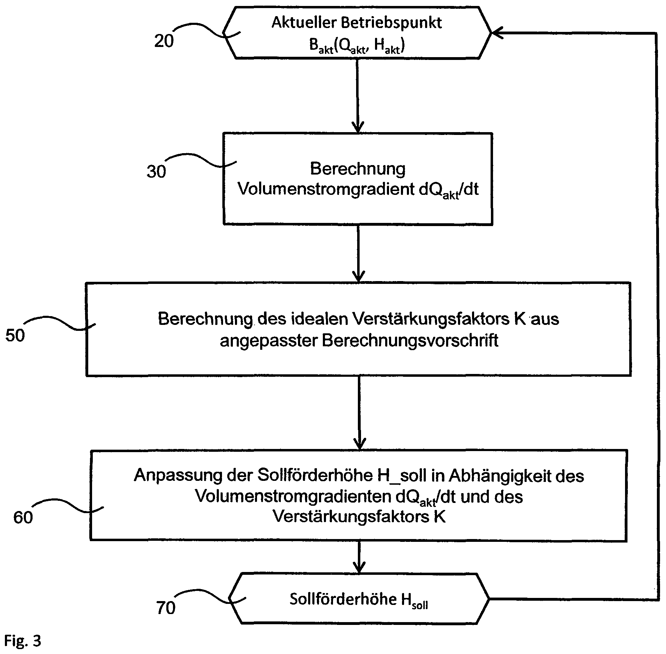

In dem Ausführungsbeispiel gemäß Figur 2 ist eine Umrechnungseinheit 5 vorgesehen, die aus der aktuellen Drehzahl n und der aktuellen Leistungsaufnahme P der Kreiselpumpe 3 die aktuelle Förderhöhe $H_{akt}$ und den aktuellen Volumenstrom $Q_{akt}$ berechnet. Die Werte dieser Größen werden dann dem dynamischen Regler 1 zugeführt, der eine Auswertung des aktuellen Volumenstroms $Q_{akt}$ durchführt und aufgrund der Auswertung eine neue Sollförderhöhe $H_{soll}$ vorgibt. Die von dem dynamischen Regler 1 durchgeführten Verfahrensschritte sind unter anderem in Figur 3 dargestellt, welche den grundlegenden Ablauf des Verfahrens zeigt.

Das Verfahren geht von dem aktuellen Betriebspunkt $B_{akt}$ der Kreiselpumpe 3 aus, der dem dynamischen Regler 1 bereitgestellt wird, Schritt 20 in Figur 3. Dabei wird zunächst unterstellt, dass das Verfahren bereits seit einiger Zeit läuft. Wird es erst gestartet, finden verschiedene vorbereitende Schritte statt, die hier der Einfachheit halber nicht dargestellt sind. Unter anderem erfolgt eine Initialisierung von Parametern und Laufvariablen bzw. Vorbelegung verschiedener Parameter mit Werten. Ferner können vor Schritt 20 zunächst einige Messwerte für ein etwaige Mittelwertbildung bzw. Glättung gesammelt werden.

Der für die Durchführung des Verfahrens notwendige aktuelle Betriebspunkt $B_{akt}$ ist definiert durch den aktuellen Volumenstrom $Q_{akt}$ und die aktuelle Förderhöhe $H_{akt}$, wobei zu Beginn des Verfahrens nur der aktuelle Volumenstrom $Q_{akt}$ von Bedeutung ist. Daher würde es genügen, in Schritt 20 nur den aktuellen Volumenstrom $Q_{akt}$ zu berücksichtigen.

Erfindungsgemäß wird zunächst ein Gradient $dQ_{akt}/dt$ des Volumenstroms $Q_{akt}$ der Kreiselpumpe 3 ermittelt, Schritt 30 in Figur 3. Der Gradient $dQ_{akt}/dt$ ist die zeitliche Ableitung des Volumenstroms $Q_{akt}$ und gibt mit seinem Vorzeichen die Richtung und mit seinem Betrag die Höhe der aktuellen Volumenstromänderung an, d.h. einen Trend. Ist der Gradient $dQ_{akt}/dt$ positiv, öffnet offensichtlich zumindest ein Ventil des hydraulischen Systems 4, infolgedessen der Volumenstrom $Q_{akt}$ zunimmt. Ist der Gradient $dQ_{akt}/dt$ dagegen negativ, schließt offensichtlich zumindest ein Ventil, infolgedessen der Volumenstrom $Q_{akt}$ abnimmt.

Die Berechnung des Gradienten $dQ_{akt}/dt$ kann zeitkontinuierlich oder diskret erfolgen. Dabei sei angemerkt, dass ohnehin das gesamte Verfahren entweder zeitkontinuierlich oder aufgrund von diskreten Abtastwerten oder sogar teilweise zeitkontinuierlich und teilweise diskret ablaufen kann. Im Falle einer zeitdiskreten Berechnung kann der Gradient $dQ_{akt}/dt$ aus dem Differenzenquotienten zweier aufeinander folgender Volumenstromwerte $Q_{akt}(t_1)$, $Q_{akt}(t_2)$ ermittelt werden, wobei die Differenz dieser Werte durch das Abtastintervall geteilt wird.

Das Abtastintervall kann beispielsweise zwischen 3s und 30s betragen. Es entspricht vorzugsweise dem Intervall, gemäß dem das Verfahren immer wieder widerholt wird. Dies bedeutet, dass am Ende jedes Intervalls ein neuer Förderhöhensollwert $H_{soll}$ vorliegt, d.h. der letzte Förderhöhensollwert $H_{soll}$ für die Dauer eines Intervalls gültig ist und vom Differenzdruckregler 2 bei der Kreiselpumpe 3 eingestellt wird. In jedem Intervall wird also der vom dynamischen Regler 1 ermittelte Förderhöhensollwert $H_{soll}$ konstant gehalten.

Um Messrauschen zu unterdrücken kann eine Glättung des Gradienten $dQ_{akt}/dt$ erfolgen. Beispielsweise kann der Gradient $dQ_{akt}/dt$ aus einer Anzahl gleitend gemittelter Volumenstromwerte $Q_{akt}$ berechnet werden. Alternativ oder zusätzlich kann der berechnete Gradient $dQ_{akt}/dt$ selbst über eine bestimmte Anzahl von Werten gleitend gemittelt werden. Bei den Anzahlen kann es sich idealerweise' jeweils um 4 bis 16 Werte handeln. Eine gleitende Mittelwertbildung bedeutet, dass ein Mittelwert über die durch die bestimmte Anzahl an Werten gebildete Gruppe ermittelt wird und der älteste Wert einer jeweils aktuellen Gruppe durch einen neuen Wert ersetzt wird, sobald dieser vorliegt. Damit eine gleitende Mittelwertbildung möglich ist, versteht es sich von selbst, dass ausreichend Werte vorliegen müssen. Daher müssen zu Beginn des Verfahrens zunächst ausreichend Messwerte gesammelt werden. Insofern kann vorgesehen sein, dass Schritt 30 erst dann ausgeführt wird, wenn ausreichend viele Werte vorliegen.

In Schritt 50 erfolgt die Berechnung zumindest eines idealen Verstärkungsfaktors K, der im nachfolgenden Schritt 60 zur Anpassung der Sollförderhöhe $H_{soll}$ benötigt wird. Die Anpassung erfolgt in Abhängigkeit des berechneten Volumenstromgradienten $dQ_{akt}/dt$ und des berechneten Verstärkungsfaktors K. Am Ende des Verfahrens liegt dann die neue Sollförderhöhe $H_{soll}$ vor, siehe Schritt 70. Das Verfahren wird dann wiederholt, wobei die Wiederholung zyklisch, hier beispielhaft alle 30 Sekunden erfolgt. Es wird dann erneut eine neue Sollförderhöhe $H_{soll}$ ausgehend von dem dann neuen aktuellen Betriebspunkt $B_{akt}$ festgelegt.

Verschiedenen Ausführungsvarianten sind für den Verfahrensablauf möglich. Die Berechnung des Volumenstromgradienten $dQ_{akt}/dt$ ist in jedem Fall für die Anpassung der Sollförderhöhe $H_{soll}$ in Schritt 60 erforderlich. Sie muss nicht unbedingt, in einem der vorherigen Schritte verwendet werden. Deshalb können in einer Ausführungsvariante die Schritte 30 und 50 in ihrer Reihenfolge vertauscht werden oder zeitgleich ausgeführt werden.

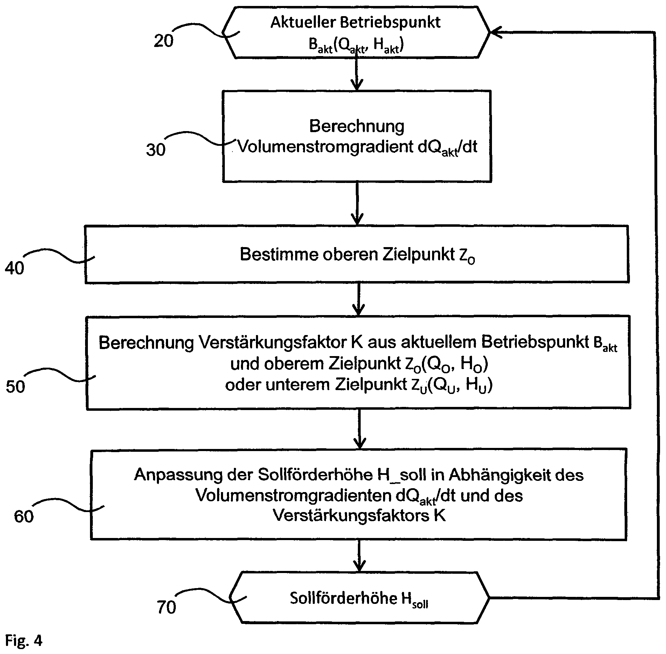

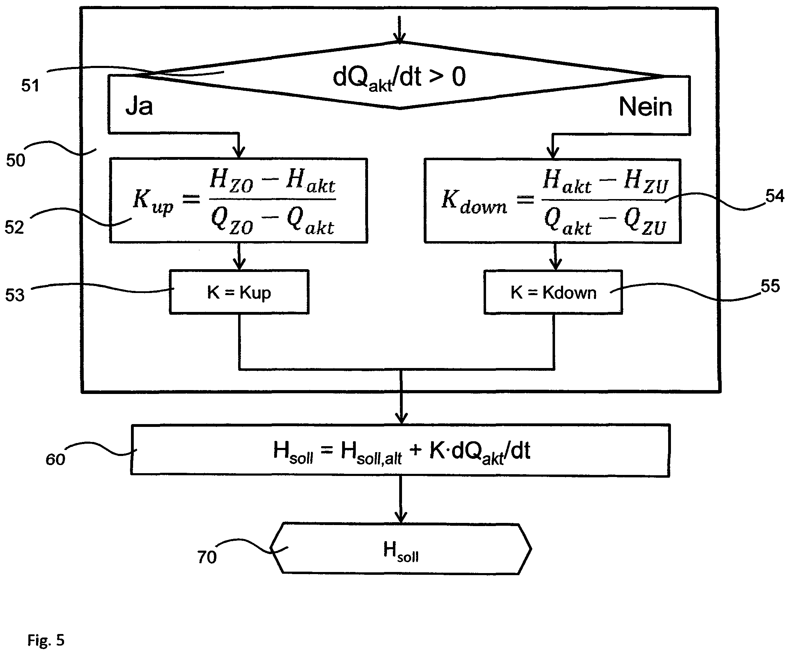

Figuren 4 und 5 zeigen eine die Berechnung des Verstärkungsfaktors K konkretisierende Ausführungsvariante des Verfahrens in Schritt 50. Dabei erfolgt die Berechnung aus dem aktuellem Betriebspunkt $B_{akt}$ und einem oberen Zielpunkt $Z_O(Q_O, H_O)$ oder aus dem aktuellem Betriebspunkt $B_{akt}$ und einem unteren Zielpunkt $Z_U(Q_U, H_U)$.

Der obere Zielpunkt $Z_O$ liegt im HQ-Diagramm oberhalb des aktuellen Betriebspunktes $B_{akt}$. Er ist durch einen Volumenstrom $Q_{ZO}$ größer als der aktuelle Volumenstrom $Q_{akt}$ definiert, vorzugsweise aber nicht notwendigerweise auch durch eine Förderhöhe $H_{ZO}$ größer als die aktuelle Förderhöhe $H_{akt}$.

Der untere Zielpunkt $Z_U$ liegt unterhalb des aktuellen Betriebspunktes $B_{akt}$. Er ist durch einen Volumenstrom $Q_{ZU}$ kleiner als der aktuelle Volumenstrom $Q_{akt}$ definiert, vorzugsweise aber nicht notwendigerweise auch durch eine Förderhöhe $H_{ZU}$ größer als die aktuelle Förderhöhe $H_{akt}$. Somit liegt der aktuelle Betriebspunkt $B_{akt}$ stets zwischen dem oberen und dem unteren Zielpunkt $Z_O$, $Z_U$.

Der untere Zielpunkt $Z_U(Q_U, H_U)$ ist zunächst vorgegeben und muss daher nicht erst ermittelt werden. Er wird benötigt, um einen idealen Verstärkungsfaktor $K=K_{down}$ im Falle eines negativen Gradienten $dQ_{akt}/dt$ zu berechnen. Dies wird in Figur 5 in Schritt 51 geprüft, wobei die dortige Abfrage $dQ_{akt}/dt > 0$ in diesem Fall entsprechend zum Nein-Zweig führen würde. Der fallspezifische Verstärkungsfaktor $K = K_{down}$ wird dann in Schritt 54 aus der Berechnungsvorschrift

$$K_{down} = \frac{H_{akt} - H_{ZU}}{Q_{akt} - Q_{ZU}}$$

ermittelt. Diese beschreibt die Steigung einer Peilgeraden zwischen dem aktuellen Betriebspunkt $B_{akt}$, der durch den aktuellen Volumenstrom $Q_{akt}$ und die aktuelle Förderhöhe $H_{akt}$ gekennzeichnet ist, und dem unteren Zielpunkt $Z_U$, der durch einen entsprechenden dem unteren Zielpunkt zugeordneten Volumenstrom $Q_{ZU}$ und eine entsprechende Förderhöhe $H_{ZU}$ gekennzeichnet ist. In Schritt 55 wird dieser fallspezifische Verstärkungsfaktor $K_{down}$ als allgemeiner Verstärkungsfaktor K gesetzt, der für die Berechnung der Sollförderhöhe $H_{soll}$ in Schritt 60 verwendet wird. Schritte 54 und 55 können jedoch auch kombiniert werden, wobei dann mit der Berechnungsvorschrift sogleich der allgemeine Verstärkungsfaktor K berechnet wird.

Ist also der Gradient $dQ_{akt}/dt$ in Schritt 51 negativ, so braucht in Schritt 50 keine weitere Berechnung durchgeführt zu werden. Die Gradientenberechnung in Schritt 30 in Figur 4 könnte dann sogleich in Schritt 50 übergehen und Schritt 50 in Schritt 60, wie dies auch in Figur 3 dargestellt ist.

Ist allerdings der Gradient $dQ_{akt}/dt$ positiv, so wird erfindungsgemäß ein zweiter fallspezifischer idealer Verstärkungsfaktor $K = K_{up}$ berechnet, siehe Schritt 52. Die hierzu angewendete Berechnungsvorschrift lautet

$$K_{up} = \frac{H_{ZO} - H_{akt}}{Q_{ZO} - Q_{akt}}$$

und beschreibt die Steigung einer Peilgeraden zwischen dem aktuellen Betriebspunkt $B_{akt}$, der durch den aktuellen Volumenstrom $Q_{akt}$ und die aktuelle Förderhöhe $H_{akt}$ gekennzeichnet ist, und dem oberen Zielpunkt $Z_O$, der durch einen entsprechenden dem oberen Zielpunkt zugeordneten Volumenstrom $Q_{ZO}$ und eine entsprechende Förderhöhe $H_{ZO}$ gekennzeichnet ist. In Schritt 53 wird dieser fallspezifische Verstärkungsfaktor $K_{up}$ als allgemeiner Verstärkungsfaktor K gesetzt, der für die Berechnung der Sollförderhöhe $H_{soll}$ in Schritt 60 verwendet wird. Schritte 52 und 53 können jedoch auch kombiniert werden, wobei dann mit der Berechnungsvorschrift sogleich der allgemeine Verstärkungsfaktor K berechnet wird.

Für den zweiten fallspezifischen Verstärkungsfaktor $K_{up}$ wird folglich der obere Zielpunkt $Z_O(Q_O, H_O)$ benötigt. Er muss daher vor Berechnung des zweiten fallspezifischen Verstärkungsfaktors $K_{up}$ bekannt sein. Seine Bestimmung erfolgt in Schritt 40, d.h. zumindest vor Schritt 52. Für die konkrete Durchführung des Schritts 40 können allerdings verschiedene Positionen sinnvoll sein.

In Figur 4 ist eine Ausführungsvariante gezeigt, in der die Bestimmung des oberen Zielpunktes $Z_O(Q_O, H_O)$ außerhalb des Schritts 50 erfolgt. Dies hat den Vorteil, dass in Schritt 50 auf die Fallunterscheidung in Schritt 51 verzichtet werden kann. Es werden dann in Schritt 50 beide fallspezifischen Verstärkungsfaktoren $K_{up}$, $K_{down}$ berechnet. Erst bei der Anpassung der Sollförderhöhe $H_{soll}$ erfolgt dann die Abfrage (Schritt 51) des Vorzeichens des Gradienten $dQ_{akt}/dt$ und damit die Entscheidung, welcher der beiden idealen Verstärkungsfaktoren $K_{up}$, $K_{down}$ verwendet werden soll. In diesem Fall kann die Ermittlung des Gradienten $dQ_{akt}/dt$ in Schritt 30 -im Gegensatz zu Figur 4- hinter Schritt 40 oder Schritt 50 stattfinden. Erfolgt die Fallunterscheidung in Schritt 51 allerdings innerhalb des Schritts 50, so muss die Berechnung des Gradienten $dQ_{akt}/dt$ notwendigerweise vorher erfolgen.

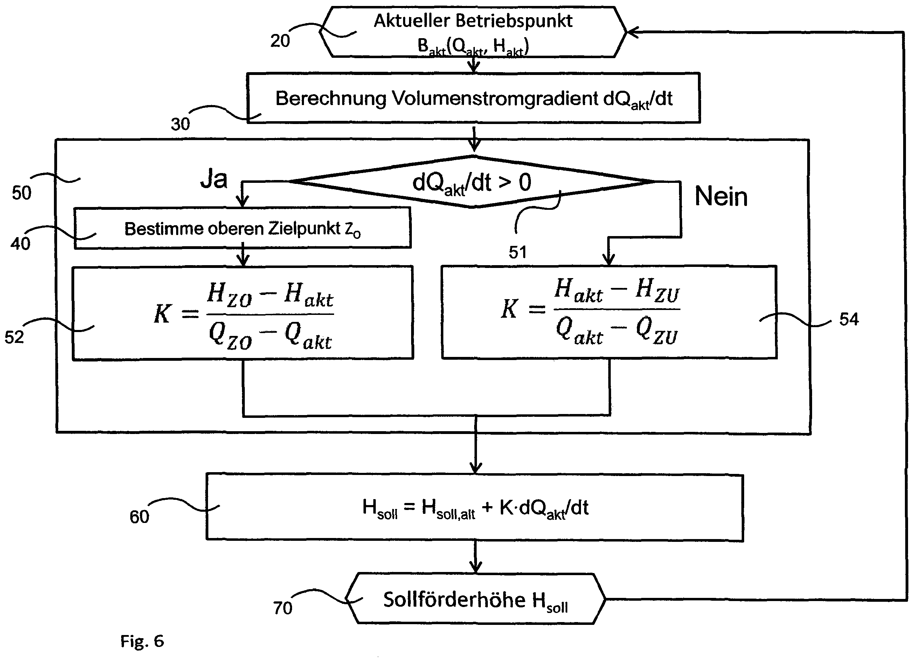

In Figur 6 ist eine alternative Ausführungsvariante zu den Figuren 4 und 5 gezeigt. Sie unterscheidet sich von der Variante in Figuren 4 und 5 darin, dass die Bestimmung des oberen Zielpunktes $Z_O(Q_O, H_O)$ unmittelbar vor der Berechnung des zweiten fallspezifischen Verstärkungsfaktors $K_{up}$ erfolgt, d.h. hier erst nach der Feststellung, dass der Gradient $dQ_{akt}/dt$ positiv ist. Deshalb folgt in Figur 6 Schritt 40 nach der Fallunterscheidung in Schritt 51 im Ja-Zweig. Der obere Zielpunkt wird hierdurch nur dann berechnet oder neu berechnet, wenn er auch tatsächlich gebraucht wird. Er wird dagegen nicht berechnet, wenn der Gradient $dQ_{akt}/dt$ in dem aktuellen Zyklus negativ ist.

Des Weiteren sind in Figur 6 die Schritte 52, 53 sowie 54 und 55 jeweils zusammengefasst. Es wird also nicht namentlich zwischen zwei verschiedenen Verstärkungsfaktoren unterschieden, wenngleich in dem Ablaufdiagramm in Figur 6 zwei verschiedene Verstärkungsfaktoren K berechnet werden. Schließlich wird in jedem Zyklus nur ein einziger Verstärkungsfaktor K berechnet, der anschließend für die Berechnung der neuen Sollförderhöhe verwendet wird.

Im Anschluss der Berechnung einer der Verstärkungsfaktoren, wird dann in Schritt 60 eine neue aktuelle Sollförderhöhe $H_{soll}$ ermittelt. Dies erfolgt in Abhängigkeit des Gradienten $dQ_{akt}/dt$, hier in Abhängigkeit des Betrages und des Vorzeichens des Gradienten $dQ_{akt}/dt$, wobei die Sollförderhöhe $H_{soll}$ aus einer mathematischen Verknüpfung des mit dem berechneten Verstärkungsfaktor K gewichteten Gradienten $dQ_{akt}/dt$ und der zuletzt vorgegebenen Sollförderhöhe $H_{soll,alt}$ berechnet wird.

Die mathematische Verknüpfung realisiert eine Mitkopplung der zwischen Volumenstromänderung $dQ_{akt}/dt$ und Sollförderhöhe $H_{soll}$. Dabei wird die Sollförderhöhe $H_{soll}$ erhöht, wenn der Volumenstrom Q steigt, d.h. der Gradient $dQ_{akt}/dt$ positiv ist, und die Sollförderhöhe $H_{soll}$ reduziert wird, wenn der Volumenstrom Q sinkt, d.h. der Gradient $dQ_{akt}/dt$ negativ ist. Durch die Mitkopplung zwischen der Förderstromänderung $dQ_{akt}/dt$ und der Förderhöhe H wird eine schnelle Reaktion der Sollförderhöhe $H_{soll}$ auf die systembedingte Änderung des geförderten Volumenstroms $Q_{akt}$ sichergestellt, z.B. wenn die Thermostatventile im Heizungssystem 4 schnell öffnen oder schließen.

Diese Mitkopplung ist derart realisiert, dass der zuletzt vorgegebenen Sollförderhöhe $H_{soll,alt}$ ein Mitkopplungswert M addiert wird, der positiv ist, wenn der Gradient $dQ_{akt}/dt$ positiv ist, und der negativ ist, wenn der Gradient $dQ_{akt}/dt$ negativ ist. Die neue Sollförderhöhe $H_{soll}$ ergibt sich folglich aus dem alten Wert $H_{soll,alt}$ plus dem Mitkopplungswert M gemäß der Gleichung

$$H_{soll} = H_{soll,alt} + M.$$

Regelungstechnisch handelt es sich dabei um einen Integrator. Der Mitkopplungswert M wird dynamisch im Betrieb der Kreiselpumpe 3 berechnet. Er entspricht dem mit einem Verstärkungsfaktor K gewichteten Volumenstromgradienten $dQ_{akt}/dt$. Der Verstärkungsfaktor K ist in diesem Fall folglich eine positive Variable. In dem vorliegenden Beispiel ist somit die mathematische Verknüpfung die Addition des mit dem Verstärkungsfaktor K gewichteten Gradienten $dQ_{akt}/dt$ zu der zuletzt vorgegebenen Sollförderhöhe $H_{soll,alt}$.

Geeigneterweise kann der Mitkopplungswert M zusätzlich einen Normierungsfaktor enthalten, mit dem das Produkt aus Verstärkungsfaktor K und Gradient $dQ_{akt}/dt$ multipliziert wird, um eine Normierung des Mitkopplungswerts M und eine Anpassung seiner Dimension an die Dimension der Sollförderhöhe $H_{soll}$ zu erreichen. Dieser Normierungsfaktor kann beispielsweise das Abtastintervall T sein. Somit gilt dann

$$M = K \cdot \frac{dQ}{dt} \cdot T.$$

Mit der Berechnung der neuen Sollförderhöhe $H_{soll}$ in Schritt 60 ist der Hauptteil des erfindungsgemäßen Verfahrens erledigt. Die neue Sollförderhöhe $H_{soll}$ wird vom dynamischen Regler 1 in Schritt 70 dem Konstantdruckregler 2 zur Verfügung gestellt, der diese dann über die Drehzahl n einstellt.

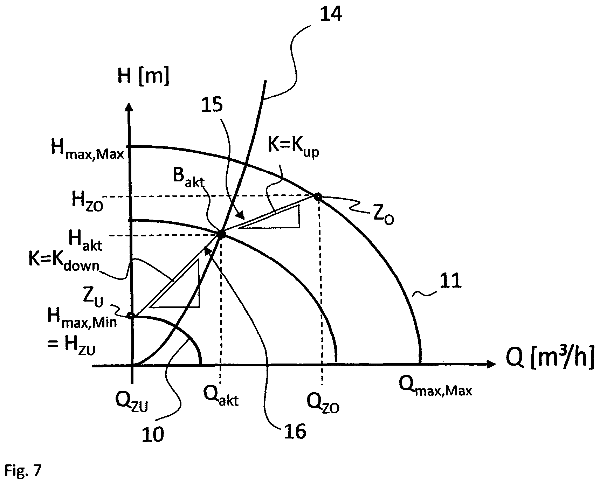

Es wird daher mit dem erfindungsgemäßen Verfahren vorgeschlagen, den aktuellen Betriebspunkt $B_{akt}$ der Kreiselpumpe 3 zu bestimmen und den aktuellen idealen Verstärkungsfaktor K aus einem funktionalen Zusammenhang zwischen dem aktuellen Betriebspunkt $B_{akt}$ und einem Zielpunkt $Z_O$, $Z_U$ zu berechnen, der entweder oberhalb oder unterhalb des aktuellen Betriebspunktes liegt. Dies wird nachfolgend anhand des HQ-Diagramms in Figur 7 veranschaulicht.

Das HQ-Diagramm zeigt das Pumpenkennfeld, welches nach unten durch die minimale Pumpenkurve 10 und nach oben durch die maximale Pumpenkurve begrenzt wird. Die minimale Pumpenkurve 10 beschreibt die Abhängigkeit der Förderhöhe H vom Volumenstrom bei minimaler Drehzahl $n_{min}$ der Kreiselpumpe, die maximale Pumpenkurve 11 die Abhängigkeit der Förderhöhe H vom Volumenstrom bei maximaler Drehzahl $n_{max}$ der Kreiselpumpe. Entlang einer Pumpenkurve 10, 11 ist die Drehzahl n der Kreiselpumpe 3 folglich konstant. Die Betriebspunkte der Kreiselpumpe 3 liegen zwischen der minimalen und der maximalen Pumpenkurve. Es sei an dieser Stelle jedoch angemerkt, dass bei der Pumpe 3 eine Leistungsbegrenzung realisiert sein kann, durch die im Betrieb eine von der maximalen Pumpenkurve 11 abweichende, geringere Maximaldrehzahl im Bereich der größten Leistung vorgegeben werden kann.

Der aktuelle Betriebspunkt $B_{akt}$ der Kreiselpumpe 3 ist durch den aktuellen Volumenstrom $Q_{akt}$ und die aktuelle Förderhöhe $H_{akt}$ definiert. Er liegt auf einer aktuellen Pumpenkurve, die sich in Figur 7 beispielhaft zwischen der minimalen und der maximalen Pumpenkurve 10, 11 befindet. Gleichzeitig liegt der aktuelle Betriebspunkt $B_{akt}$ auf einer Anlagenkennlinie 14, die den aktuellen Zustand des hydraulischen Systems beschreibt. Diese Anlagenkennlinie 14, auch Rohrnetzparabel genannt, ist hier beispielhaft durch eine Parabel der Form $H_A = k \cdot Q^2$ beschrieben, wobei k die Steigung der Parabel angibt. Ein Rückflussverhinderer wird hier der Einfachheit halber nicht berücksichtigt. Die Steigung ist gleichzeitig ein Maß für den hydraulischen Widerstand des Systems 4. Je weiter sich die Ventile schließen und/ oder je mehr Ventile schließen, desto größer wird k, d.h. desto steiler wird die Anlagenkennlinie. Und je weiter sich die Ventile öffnen und/ oder je mehr Ventile öffnen, desto kleiner wird k, d.h. desto flacher wird die Anlagenkennlinie.

Anhand der Pumpenkurven 10, 11 wird deutlich, dass die Kreiselpumpe 3 bei jeder Drehzahl n eine maximale Förderhöhe und einen maximalen Volumenstrom auf der der Drehzahl zugehörigen Pumpenkurve erreichen kann. Dies ist abhängig von Lage der Anlagenkennlinie 14. Die theoretisch maximale Förderhöhe auf der maximalen Pumpenkurve 11 ist mit $H_{max,Max}$ bezeichnet, der theoretisch maximale Volumenstrom auf der maximalen Pumpenkurve 11 mit $Q_{max,Max}$. Entsprechend ist die theoretisch maximale Förderhöhe auf der minimalen Pumpenkurve 11 mit $H_{max,Min}$ bezeichnet, der theoretisch maximale Volumenstrom auf der minimalen Pumpenkurve 11 mit $Q_{max,Min}$ bezeichnet.

In der Ausführungsvariante gemäß Figur 7 ist der untere Zielpunkt $Z_U$ fest, zumindest anfänglich des Verfahrens. Eine Anpassung kann jedoch erfolgen, wenn ein Rückflussverhinderer im hydraulischen System vorliegt und erkannt wird. Der untere Zielpunkt $Z_U$ ist in Figur 7 auf den Betriebspunkt maximaler Förderhöhe $H_{max,Min}$ auf der minimalen Pumpenkurve 10 gelegt. In diesem Punkt ist der Volumenstrom null.

Wie die Ausführungsvariante in Figur 7 zu erkennen gibt, ist ein oberer Zielpunkt $Z_O$ definiert, der oberhalb des aktuellen Betriebspunktes $B_{akt}$ liegt. Er ist durch eine Förderhöhe $H_{ZO}$ und einen Volumenstrom $Q_{ZO}$ charakterisiert. Der obere Zielpunkt $Z_O$ kann ebenfalls fest sein, beispielsweise im Betriebspunkt maximaler Leistung der Kreiselpumpe 3 liegen. Für eine bessere dynamische Anpassung des Verstärkungsfaktors K ist es jedoch von Vorteil, den oberen Zielpunkt $Z_O$ veränderlich zu halten.

In Figur 7 ist der obere Zielpunkt so gewählt, dass er auf der maximalen Pumpenkurve 11 liegt. Dies muss jedoch nicht so sein.

Ist beispielsweise die Kreiselpumpe 3 für das hydraulische System 4 überdimensioniert, wird sie niemals einen Betriebspunkt auf der maximalen Pumpenkurve 11 erreichen. In diesem Fall kann der obere Zielpunkt $Z_O$ auf derjenigen Pumpenkurve liegen, die zu der höchsten Drehzahl n gehört, die die Kreiselpumpe 3 im Betrieb im hydraulischen System 4 gefahren ist. Diese höchste Drehzahl kann überwacht, vermerkt und immer wieder korrigiert werden, wenn eine noch höhere als die aktuell vermerkte höchste Drehzahl gefahren wird. Wird die Drehzahl nach oben korrigiert, kann bevorzugt auch der obere Zielpunkt $Z_O$ nach oben korrigiert werden, so dass er weiterhin auf der der höchsten Drehzahl zugeordneten Pumpenkurve liegt.

Ein anderer Fall, dass der obere Zielpunkt nicht auf der maximalen Pumpenkurve 11 liegen muss, liegt dann vor, wenn eine Leistungsbegrenzung der Pumpe 3 wirkt. Denn in diesem Fall wird die Drehzahl gegenüber der maximalen Drehzahl auf der maximalen Pumpenkurve 11 reduziert, um eine bestimmte Leistungsgrenze nicht zu überschreiten. Dies bewirkt, dass die maximale Pumpenkurve in dem die Leistungsgrenze überschreitenden Bereich des Pumpenkennfeldes abgeflacht ist und in etwa eine Gerade bildet. Der obere Zielpunkt liegt dann auf einer Kurve die außerhalb der Leistungsgrenze durch die maximale Pumpenkurve und innerhalb der Leistungsgrenze durch diese Gerade beschrieben ist.

In Figur 7 jedoch davon ausgegangen, dass die Kreiselpumpe 3 an das hydraulische System leistungsmäßig angepasst ist, d.h. nicht überdimensioniert ist und auch keine Leistungsgrenze wirkt. Das Pumpenkenfeld wird deshalb durch die maximale Pumpenkurve begrenzt, so dass der obere Zielpunkt sinnvollerweise auf dieser maximalen Pumpenkurve liegt.

Idealerweise wird der obere Zielpunkt aus vergangenen Zuständen des hydraulischen Systems 4 berechnet, wie nachfolgend noch beschrieben wird. Dies kann zusätzlich oder alternativ zur Berücksichtigung der höchsten Drehzahl erfolgen.

Wie in den Schritten 52 und 54 der Figuren 5 und 6 dargestellt, wird der Verstärkungsfaktor K ausgehend vom aktuellen Betriebspunkt aus der Steigung einer Geraden ermittelt. Wie Figur 7 veranschaulicht, wird hierzu eine Peilgerade 15, 16 zwischen dem aktuellen Betriebspunkt $B_{akt}$ und einem der Zielpunkte $Z_O$, $Z_U$ verwendet, wobei als Verstärkungsfaktor K die Steigung dieser Peilgeraden 15, 16 verwendet wird.

Die Grundidee der Erfindung besteht somit darin, einen Referenzpunkt $Z_O$ oder $Z_U$ zu verwenden und diesen zum aktuellen Betriebspunkt $B_{akt}$ in Bezug zu setzen. Dieser Referenzpunkt Zo, Zu wird in gewisser Weise angepeilt, was im HQ-Diagramm ausgehend vom aktuellen Betriebspunkt $B_{akt}$ in Gestalt der den aktuellen und den Referenzpunkt $Z_O$, $Z_U$ verbindenden Geraden 15, 16 veranschaulicht werden kann. Daher wird bei den Referenzpunkten $Z_O$, $Z_U$ auch von Zielpunkten gesprochen. Es wird dann die Steigung einer der Peilgeraden 15, 16 berechnet und als Verstärkungsfaktor K verwendet.

Bereits aufgrund der Verwendung des aktuellen Betriebspunktes $B_{akt}$ zur Berechnung des Verstärkungsfaktors K ist seine Berechnungsvorschrift stets eine andere und ändert sich dynamisch im Betrieb der Kreiselpumpe 3. Im HQ-Diagramm veranschaulicht ändert sich bereits infolge der Änderung des aktuellen Betriebspunktes $B_{akt}$ die Steigung der Peilgeraden 15, 16 und damit des Verstärkungsfaktors K. Zusätzlich ändert sich die Steigung, wenn auch der Zielpunkt geändert wird. Dadurch wird zum einen eine optimale Anpassung der Pumpe 3 an den Lastzustand des hydraulischen Systems 4 erreicht, zum anderen werden mitkopplungsbedingte Schwingungen im hydraulischen System 4 weitestgehend vermieden.

Ist der Gradient $dQ_{akt}/dt$ positiv, wird eine Peilgerade 15 vom aktuellen Betriebspunkt $B_{akt}$ zum oberen Betriebspunkt $Z_O$ verwendet. Die Steigung dieser ersten Peilgeraden 15 ergibt sich dann aus dem Verhältnis der Längen der beiden Katheten eines an die erste Peilgerade gelegten rechtwinkligen Dreiecks. Diese Steigung wird als Verstärkungsfaktor K oder erster Verstärkungsfaktor $K_{up}$ gewählt, so dass gilt

$$K = K_{up} = \frac{H_{ZO} - H_{akt}}{Q_{ZO} - Q_{akt}}$$

wobei K allgemein der Verstärkungsfaktor, $K_{up}$ der erste Verstärkungsfaktor für steigenden Volumenstrom, $H_{ZO}$ die dem oberen Zielpunkt $Z_O$ zugeordnete Förderhöhe, $H_{akt}$ die dem aktuellen Betriebspunkt $B_{akt}$ zugeordnete Förderhöhe, $Q_{ZO}$ der dem oberen Zielpunkt $Z_O$ zugeordnete Volumenstrom, und $Q_{akt}$ der dem aktuellen Betriebspunkt $B_{akt}$ zugeordnete Volumenstrom ist.

Ist der Gradient negativ, wird eine Peilgerade 16 vom aktuellen Betriebspunkt $B_{akt}$ zum unteren Betriebspunkt $Z_U$ verwendet. Die Steigung dieser zweiten Peilgeraden 16 ergibt sich dann aus dem Verhältnis der Längen der beiden Katheten eines an die zweite Peilgerade 16 gelegten rechtwinkligen Dreiecks. Diese Steigung wird als neuer Verstärkungsfaktor K oder erster Verstärkungsfaktor $K_{down}$ gewählt, so dass gilt

$$K = K_{down} = \frac{H_{akt} - H_{ZU}}{Q_{akt} - Q_{ZU}}$$

berechnet werden, wobei K allgemein der Verstärkungsfaktor, $K_{down}$ der zweite Verstärkungsfaktor, $H_{ZU}$ die dem unteren Betriebspunkt $B_{akt}$ zugeordnete Förderhöhe, $H_{akt}$ die dem aktuellen Betriebspunkt $B_{akt}$ zugeordnete Förderhöhe, $Q_{ZU}$ die dem unteren Betriebspunkt zugeordnete Volumenstromstrom, $Q_{akt}$ die dem aktuellen Betriebspunkt zugeordnete Förderstrom ist. Da in dem Ausführungsbeispiel in Figur 7 der untere Zielpunkt $Z_U$ bei Volumenstrom Q null und maximaler Förderhöhe $H_{max,Min}$ auf der minimalen Pumpenkurve 10 liegt, gilt

$$K = K_{down} = \frac{H_{akt} - H_{min,Max}}{Q_{akt}}$$

Die Verwendung verschiedener Verstärkungsfaktoren $K_{up}$, $K_{down}$ für steigende und sinkende Volumenströme Q hat den Vorteil, dass mit unterschiedlichen Geschwindigkeiten auf die verschiedenen Zustandsänderungen im System, d.h. auf sich öffnende oder sich schließende Ventile, reagiert werden kann. Sind demgegenüber die beiden Verstärkungsfaktoren $K_{up}$, $K_{down}$ gleich, so bilden die erste und die zweite Peilgerade 15 16 eine gemeinsame, knickfreie Gerade.

Die Kreiselpumpe 3 wird überwiegend im Teillastbetrieb laufen, d.h. bei einem Systemzustand mit teilweise geöffneten und teilweise geschlossenen Ventilen oder mit einem Teil geöffneten und einem Teil geschlossenen Ventilen. Die Wahl des unteren Zielpunktes $Z_U$ auf der minimalen Pumpenkurve 10 und des oberen Zielpunktes $Z_O$ auf der maximalen Pumpenkurve 11 führt deshalb dazu, dass der Verstärkungsfaktor $K_{up}$ bei steigenden Volumenströmen Q größer ist, als bei sinkenden Volumenströmen Q. So kann beispielsweise im Fall einer Heizungsanalage auf eine Wärmeanforderung hin, bei der sich Ventile öffnen, schnell reagiert und der für den Wärmetransport benötigte Volumenstrom zur Verfügung gestellt werden. Eine langsame Reaktion hätte dagegen längere Wartezeiten zur Folge, bis die Wärme am Verbraucher ankommt, so dass der entsprechende Raum langsamer aufgeheizt wird und der Komfort des Nutzers beeinträchtigt ist.

Demgegenüber kann im umgekehrten Fall sich schließender Ventile eine langsame Reaktion ausreichen und sogar von Vorteil sein. In diesem Fall würde die Kreiselpumpe 3 zwar für einige Zeit nicht energetisch optimal laufen, jedoch führt dies nicht zu einer Komfortbeeinträchtigung seitens des Nutzers. Vielmehr kann die Pumpe 3 langsam einen Betriebszustand herausfinden, in welchem sie weniger Energie verbraucht und dennoch die notwendige Wärmeenergie bereitstellen, wobei sie auf dem Weg dorthin quasi "in Bereitschaft" ist, schnell wieder zu höheren Volumenströmen zu wechseln, da sie ihren energieoptimalen Betrieb, der möglicherweise weit weg vom vorherigen Betriebspunkt ist, noch nicht erreicht hat.

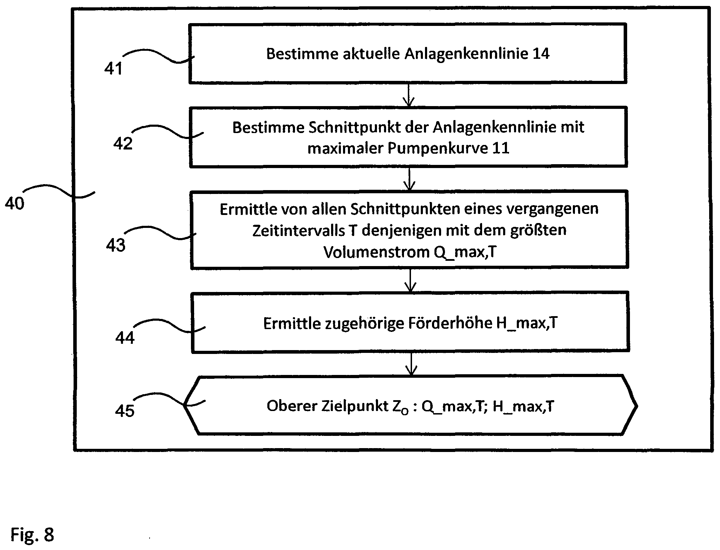

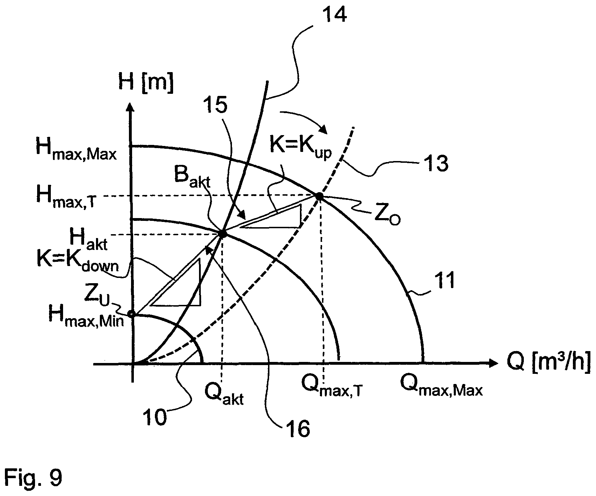

Figur 8 stellt Verfahrensschritte einer Ausführungsvariante für die Festlegung eines geeigneten oberen Zielpunktes $Z_O$ dar. Bei dieser Variante wird der obere Zielpunkt $Z_O$ aus vergangenen Zuständen des hydraulischen Systems 4 berechnet. Dabei ist es Ziel, dass der dynamische Regler 1 den oberen Zielpunkt $Z_O$ dorthin legt, wo die Pumpe 3 mit Volllast betrieben wird. Insbesondere soll er dort liegen, wo die Pumpe 3 bei höchster Drehzahl n den größten Volumenstrom Q fördert. Dies erfolgt in der Ausführungsvariante gemäß Figur 8 dadurch, dass vom dynamischen Regler 1 ein Zielpunkt $Z_O$ auf der maximalen Pumpenkurve 11 gewählt wird. Dies erfolgt dadurch, dass die flachste Anlagenkennlinie 13 ermittelt und deren Schnittpunkt mit der maximalen Pumpenkurve 11 als oberer Zielpunkt $Z_O$ gesetzt wird. Dies ist in Figur 9 gezeigt.

Hierzu wird in einem ersten Schritt 41 die aktuelle Anlagenkennlinie 14 bestimmt. Die Anlagenkennlinie beschreibt mathematisch den funktionalen Zusammenhang zwischen Förderhöhe H und Volumenstrom Q des das hydraulische System 4 bildenden Rohrleitungsnetzes einschließlich der angeschlossenen Verbraucher und ihrer regelnden Stellmittel. Dieser Zusammenhang ist im einfachsten Fall quadratisch gemäß der Gleichung $H_A(Q) = k \cdot Q^2 + c_x$, so dass bei der Anlagenkennlinie auch von einer Rohrnetzparabel gesprochen werden kann, dessen Steilheit durch den Wert des Parameters k definiert ist. Der Parameter $c_x$ gibt, ausgedrückt als Förderhöhenwert, den Differenzdruck an, der zum Öffnung eines Rückflussverhinderers überwunden werden muss. Sofern das hydraulische System 4 keinen Rückflussverhinderer enthält, kann $c_x$ zu null gesetzt werden. Die Bestimmung der aktuellen Anlagenkennlinie 14 erfolgt, indem der oder die Parameter k, $c_x$ der Rohrnetzparabel ermittelt wird/ werden. Die Bestimmung des Schnittpunktes zwischen der Anlagenkennlinie 14 und der maximalen Pumpenkurve 11 erfolgt anschließend in Schritt 42. Der Schnittpunkt kann durch Gleichsetzen der mathematischen Gleichungen für die Anlagenkennlinie 14 und der maximalen Pumpenkurve 11 erfolgen.

Die Berechnung der aktuellen Anlagenkennlinie 14 wird mit jedem Zyklus des Verfahrens wiederholt, so dass zu jedem Zeitpunkt bekannt ist, welche vergangenen Anlagenkurven existierten. Jeder Schnittpunkt mit der maximalen Pumpenkurve 11 ist durch einen bestimmten Volumenstrom und eine bestimmte Förderhöhe gekennzeichnet. Durch die zyklische Bestimmung der Anlagenkennlinie 14 und des Schnittpunktes ergibt sich folglich eine Menge von Volumenströmen. Daraus folgt eine Ermittlung, welcher von allen bestimmten Schnittpunkten derjenige mit dem größten Volumenstrom $Q_{max,T}$ ist. Aus der Menge an Volumenströmen wird folglich der größte Volumenstrom $Q_{max,T}$ ermittelt. Dieser größte Volumenstrom $Q_{max,T}$ liegt auf derjenigen Anlagenkennlinie 13, die am flachsten ist. Kommt zu der Menge ein neuer Volumenstromwert eines neuen Schnittpunkts hinzu, der noch größer ist, als alle bisherigen Werte, wird dieser neue Wert als größter Volumenstromwert $Q_{max,T}$ gesetzt, da sich offensichtlich bei dem hydraulischen System 4 eine noch flachere Anlagenkennlinie eingestellt hat.

Es sei angemerkt, dass nicht unbedingt eine Menge an Volumenstromwerten der Schnittpunkte gebildet werden muss. Vielmehr kann der größte Volumenstrom abgespeichert und immer wieder durch einen noch höheren Volumenstrom ersetzt werden, sobald dieser erkannt wird. Zu Beginn der Berechnung wird dann einfach der erste ermittelte Volumenstrom als größter Volumenstrom gesetzt.

Wird jedoch die Bildung der Menge von Volumenströmen verwendet, so empfiehlt es sich, diese Menge nicht unendlich groß werden zu lassen sondern auf einen Bezugszeitraum T zu begrenzen. Aufgrund der bei einem Heizungssystem in Folge der Nutzergewohnheiten vorliegenden periodischen Wiederkehr bestimmter Lastzustände ist es sinnvoll, den Bezugszeitraum auf 24 Stunden festzulegen, da sich aufgrund der Nutzergewohnheiten die Heizkurve täglich wiederholt. Dies gilt zumindest für die Wochentage. Denn die charakteristischen Lastzustände des hydraulischen Systems 3, beispielsweise das Aufheizen morgens und abends, wenn man zuhause ist oder das Büro betritt bzw. verlässt, oder die Temperaturabsenkung nachts, widerholen sich täglich. Es kann jedoch auch ein kürzerer Bezugszeitraum T verwendet werden, beispielsweise 12 Stunden, um für einen Tag und Nachbetrieb jeweils einen höchsten Volumenstrom $Q_{max,T}$ zu ermitteln, oder ein Vielfaches von 24 Stunden, um über zwei oder mehr Tage einen höchsten Volumenstrom $Q_{max,T}$ zu ermitteln.

Der Bezugszeitraum T kann vorzugsweise als gleitendes Zeitfenster verwendet werden. Dies bedeutet, der höchste Volumenstrom der Menge allmählich älter wird und, sofern kein neuer höchster Volumenstrom festgestellt wird, nach einem der Dauer des Bezugszeitraums T entsprechenden Alter aus der Menge rausfällt und der zweithöchste Volumenstrom der Menge zum höchsten Volumenstrom wird. Das gleitende Zeitfenster hat somit einen regenerativen Effekt.

Alternativ zum gleitenden Zeitfenster kann die Menge an Volumenströmen oder jedenfalls der höchste ermittelte Volumenstrom nach einem bestimmten Bezugszeitraum T gelöscht und neu gebildet werden.

Figur 9 veranschaulicht, dass die aktuelle Anlagenkennlinie 14 steiler ist, als die flachste, Anlagenkennlinie 13 (gestrichelte Linie), die sich bei dem System 4 seit Beginn des aktuellen Bezugszeitraums T eingestellt hat. Öffnen die Ventile der Verbraucher, bewegt sich die aktuelle Anlagenkennlinie 14 in Richtung der flachsten Anlagenkennlinie 13.

Sobald der größte Volumenstrom $Q_{max,T}$ bekannt ist, kann die zugehörige Förderhöhe $H_{max,T}$ ermittelt werden, Schritt 44, beispielsweise indem der größte Volumenstrom $Q_{max,T}$ in die Gleichung für die Anlagenkennlinie 14 oder die Gleichung für die maximale Pumpenkurve eingesetzt wird. Die beiden ermitteln Werte $Q_{max,T}$ und $H_{max,T}$ werden anschließend als oberer Zielpunkt $Z_O$ gesetzt, Schritt 45, der dann für die weiteren Verfahrensschritte verwendet wird. Mit diesen Werten ergibt sich für die mathematische Berechnungsvorschrift in Schritt 52,

$$K = K_{up} = \frac{H_{max,T} - H_{akt}}{Q_{max,T} - Q_{akt}}.$$

Als Alternative zur wiederholten Berechnung der Anlagenkennlinie 14, sowie des Schnittpunktes und der anschließenden Bestimmung des höchsten Volumenstroms $Q_{max,T}$, kann zur Ermittlung der flachsten Anlagenkennlinie die Steigung k der jeweils ermittelten aktuellen Anlagenkennlinie 14 verwendet wird. Denn die flachste Anlagenkennlinie ist diejenige mit dem kleinsten Parameter k. An die Ermittlung der aktuellen Anlagenkennlinie 14 in Schritt 41 von Figur 8 kann sich daher ein Schritt anschließen, in welchem direkt die flachste Anlagenkennlinie bestimmt wird. Dies kann, analog zum oben geschilderten Vorgehen, entweder dadurch erfolgen, dass die Steigung k jeder ermittelten Anlagenkennlinie bestimmt, in einer Menge von Steigungen gesammelt und anschließend aus dieser Menge die kleinste Steigung $k_{min}$ ermittelt wird, oder es kann dadurch erfolgen, dass bei jeder ermittelten Steigung k geprüft wird, ob diese kleiner ist als eine zuvor festgestellte kleinste Steigung $k_{min}$. Im genannten zweiten Fall ist lediglich zu Beginn des Verfahrens die Steigung der ersten ermittelten Anlagenkennlinie als kleinste Steigung $k_{min}$ abzuspeichern.

Ist die kleinste Steigung $k_{min}$ bekannt, liegt auch die flachste Anlagenkennlinie vor. Es kann dann in einem folgenden Schritt der Schnittpunkt der flachsten Anlagenkennlinie mit der maximalen Pumpenkurve respektive der diesen Schnittpunkt definierende Volumenstrom $Q_{max,T}$ und die definierende Förderhöhe $H_{max,T}$ ermittelt und als oberer Zielpunkt verwendet werden.

Mit dieser alternativen Variante wird also nicht bei jedem Zyklus der Schnittpunkt mit der maximalen Pumpenkurve 11 und daraus die flachste Anlagenkennlinie ermittelt, sondern zuerst die flachste Anlagenkennlinie und daraus dann der Schnittpunkt.

Auch bei der beschriebenen alternativen Variante kann die Ermittlung der kleinsten Steigung $k_{min}$ für einen bestimmten Bezugszeitraum T erfolgen, d.h., dass nach dem Ende des Bezugszeitraums T die kleinste bestimmte Steigung $k_{min}$ wieder gelöscht und erneut ermittelt wird. Für den Bezugszeitraum T gelten dieselben Eigenschaften wie zuvor erläutert.

Anhand von Figur 9 wird das beschriebene Verfahren anschaulich. Der gesuchte ideale Verstärkungsfaktor K wird erfindungsgemäß für positive Gradienten $dQ_{akt}/dt$ betraglich gleich der Steigung der ersten Peilgeraden 15 und für negative Gradienten $dQ_{akt}/dt$ gleich der Steigung der zweiten Peilgeraden 16 gewählt. Der Verstärkungsfaktor K wird somit bei einer Volumenstromzunahme, d.h. bei positivem Gradienten $dQ_{akt}/dt > 0$ (Schritt 52), nach einer anderen mathematischen Vorschrift ermittelt, als bei einer Volumenstromabnahme, d.h. bei negativem Gradienten $dQ_{akt}/dt < 0$ (Schritt 54). Zusammengefasst gilt für ihn unter Berücksichtigung des in Figur 9 dargestellten oberen und unteren Zielpunktes $Z_O$, $Z_U$ die folgende Berechnungsvorschrift:

$$K = \begin{cases} K_{up} = \dfrac{H_{max,T} - H_{akt}}{Q_{max,T} - Q_{akt}} & f\ddot{u}r \ \dfrac{dQ}{dt} > 0 \\[2em] K_{down} = \dfrac{H_{akt} - H_{max,Min}}{Q_{akt}} & f\ddot{u}r \ \dfrac{dQ}{dt} < 0 \end{cases}$$

Der mathematischen Vollständigkeit halber sei erwähnt, dass der Verstärkungsfaktor K für $dQ_{akt}/dt < 0$ gleich null gesetzt werden kann, da in diesem Fall keine Anpassung der Sollförderhöhe $H_{soll}$ erforderlich ist.

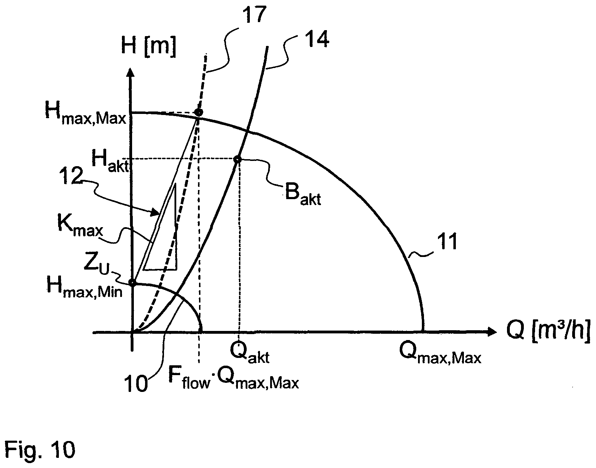

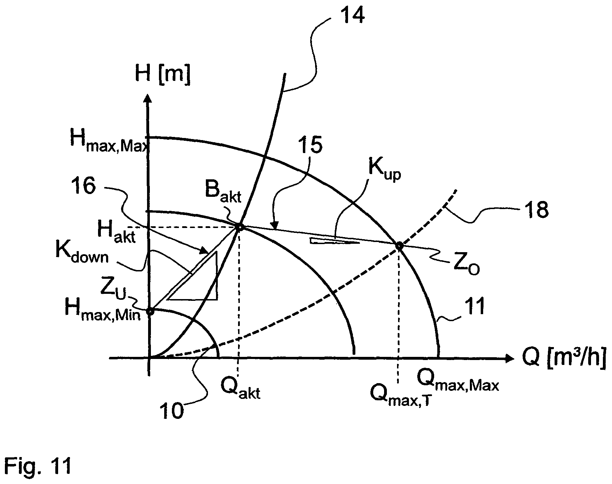

Als Sicherheitsmaßnahmen können verschiedenen Grenzwertbetrachtungen durchgeführt werden, die das Verfahren besonders robust und fehlersicher machen. Diese sind in den Figuren 10 und 11 veranschaulicht.

So zeigt Figur 10, den Verstärkungsfaktor K durch einen Maximalwert $K_{max}$ zu begrenzen, der durch die Steigung einer Geraden 12 zwischen einem unteren und einem oberen Grenzpunkt entspricht. Der untere Grenzpunkt liegt hier auf der minimalen Pumpenkurve 10 bei Volumenstrom null. Er entspricht also beispielhaft dem unteren Zielpunkt $Z_U$. Der obere Grenzpunkt liegt oberhalb der maximalen Pumpenkurve 11. Er ist definiert durch die maximale Förderhöhe $H_{max,Max}$ auf der maximalen Pumpenkurve 11 und dem mit einem Faktor $F_{flow}$ gewichteten maximalen Volumenstrom $Q_{max,Max}$ auf der maximalen Pumpenkurve 11. Der Faktor $F_{flow}$ orientiert sich an der maximalen Änderungsgeschwindigkeit der Drehzahl der Kreiselpumpe 3, und liegt hier zwischen 10% und 20%. Der obere Grenzpunkt liegt zudem idealerweise auf der steilsten Anlagenkennlinie 17 des hydraulischen Systems 4. Der Maximalwert $K_{max}$ kann berechnet werden aus

$$K_{max} = \frac{H_{max,Max} - H_{max,Min}}{F_{flow} Q_{max,Max}}.$$

Erreicht der Verstärkungsfaktor K infolge der Berechnung gemäß o.g. Berechnungsvorschrift einen Wert größer als der beschriebene Maximalwert $K_{max}$, wird der Verstärkungsfaktor K auf diesen Maximalwert $K_{max}$ begrenzt. Die durch diesen Maximalwert erfolgende Begrenzung stellt sicher, dass im Falle von sehr kleinen Volumenströmen oder im Falle eines Volumenstroms null immer noch eine Anlagenkennlinie berechnet werden kann. Zusätzlich werden Überreaktionen vermieden.

Figur 11 veranschaulicht einen Fall, bei dem der für einen positiven Gradienten berechnete Verstärkungsfaktor $K_{up}$ negativ wird. Hier liegt die flachste Anlagenkennlinie 18 tiefer als diejenige in Figur 9.

An dieser Stelle sei angemerkt, dass dies veranschaulicht, dass bei Figur 9 der Bezugszeitraum T entweder noch nicht beendet ist und sich die flachste Anlagenkennlinie 18 wie in Figur 11 erst noch einstellen wird, dem dynamischen Regler aber noch nicht bekannt ist, oder dass sich der Zustand des hydraulischen Systems 4, dem die flachste Anlagenkennlinie aus Figur 11 zugeordnet ist, in dem in Figur 9 betrachteten Bezugszeitraum T einfach nicht einstellt. Dies verdeutlicht, dass die flachste Anlagenkennlinie 13 in Figur 9 eine relativ betrachtet, bezugszeitraumbezogene flachste Anlagenkennlinie ist, wohingegen die flachste Kennlinie 18 in Figur 11 die absolut flachste Anlagenkennlinie ist.

Im aktuellen Betriebspunkt $B_{akt}$ nach Figur 11 ist die aktuelle Förderhöhe $H_{akt}$ größer als die dem oberen Zielpunkt $Z_O$ zugeordnete Förderhöhe $H_{max,T}$. Sie liegt also höher, infolgedessen die Peilgerade 15 zum oberen Zielpunkt $Z_O$ fällt. Die Steigung der Peilgeraden 15 sowie der berechnete Verstärkungsfaktor sind damit negativ.

Dasselbe kann für die andere Peilgerade 16 geschehen, wenn nämlich im aktuellen Betriebspunkt $B_{akt}$ ist die

aktuelle Förderhöhe $H_{akt}$ kleiner als die dem unteren Zielpunkt $Z_U$ zugeordnete Förderhöhe $H_{max,Min}$ ist. Sie liegt dann also tiefer, infolgedessen die andere Peilgerade 16 zum unteren Zielpunkt $Z_O$ steigt. Die Steigung der Peilgeraden 15 ist damit positiv, der berechnete Verstärkungsfaktor $K_{down}$ negativ.

Da die Mitkopplung in diesen Fällen in eine Gegenkopplung konvertiert, wird der berechnete Verstärkungsfaktor $K_{up}$, $K_{down}$ auf einen Minimalwert $K_{min}$ begrenzt. Dieser beträgt null, wenn der Verstärkungsfaktor allmählich unter null sinkt. Dies bedeutet, dass der Förderhöhensollwert $H_{soll}$ in diesem Fall nicht verändert wird, d.h. die Pumpe 3 für den nächsten Zyklus auf derselben $\Delta$p-c Kennlinie geregelt wird. Springt der berechnete Verstärkungsfaktor $K_{up}$ dagegen von einem positiven Wert auf einen Wert unter null, so wird er auf den letzten nicht-negativen Wert gesetzt. Negativer Werte für den Verstärkungsfaktor $K_{up}$ ergeben sich auch dann, wenn sich der Betriebspunkt der Kreiselpumpe 3 auf der maximalen Pumpenkurve 11 bewegt.

Eine Überprüfung, ob der berechnete Verstärkungsfaktor K den Minimalwert unterschreitet oder den Maximalwert überschreitet, einschließlich seiner Korrektur, kann nach Schritt 50, insbesondere aber unmittelbar nach Schritt 52 oder 54 erfolgen.

Zusätzlich oder alternativ kann bei dem erfindungsgemäßen Verfahren vorgesehen werden, das ein oberer Zielpunkt $Z_O$ der bezüglich seiner Förderhöhe $H_{ZO} = H_{max,T}$ unterhalb der dem unteren Zielpunkt $Z_U$ zugeordneten Förderhöhe $H_{max,Min}$ liegt, verboten wird. Daher kann sich an Schritt 44 unmittelbar eine Abfrage anschließen, ob diese Bedingung erfüllt ist. Bejahendenfalls wird die Förderhöhe $H_{ZO}$ für den oberen Zielpunkt gleichgesetzt mit der dem unteren Zielpunkt $Z_U$ zugeordneten Förderhöhe $H_{ZU} = H_{max,Min}$. Verneinendenfalls bleibt die ermittelte Förderhöhe $H_{ZO}$ unverändert.

Als weitere Sicherheitsmaßnahme kann vorgesehen werden, dass ein neu gemessener Volumenstromwert $Q_{akt}$ auf den letzten gemessenen Volumenstromwert $Q_{akt}$ zurückgesetzt wird, wenn der neue Volumenstromwert $Q_{akt}$ größer als der maximale Volumenstrom $Q_{max,Max}$ auf der maximalen Pumpenkurve 11 ist. Denn dies ist nicht plausibel. Ein solcher Messwert kann sich bei einer fehlerhaften Messung ergeben und das Verfahren empfindlich stören. Die Korrektur des Volumenstromwerts $Q_{akt}$ kann sich unmittelbar an Schritt 20 anschließen.

Ferner kann als weitere Sicherheitsmaßnahme vorgesehen werden, dass die in Schritt 41 bestimmte Anlagenkennlinie 14 daraufhin geprüft wird, ob ihre Steilheit einen Maximalwert $k_{max}$ überschreitet. Dieser ergibt sich, wenn als steilste Anlagenkennlinie 17 diejenige zugelassen wird, die durch den oberen Grenzpunkt verläuft. Der Steigungsmaximalwert $k_{max}$ ergibt sich dann aus

$$k_{max} = \frac{H_{max,Max}}{\left(F_{flow} Q_{max,Max}\right)^2}$$

So kann sich unmittelbar an Schritt 41 eine Abfrage anschließen, ob die mit der aktuellen Anlagenkennlinie 14 ermittelte Steigung k den Maximalwert $k_{max}$ überschreitet. Wenn dies der Fall ist, wird die Steigung auf diesen Maximalwert $k_{max}$ begrenzt.

Wie zuvor bereits angesprochen wurde, kann der untere Betriebspunkt im Betrieb der Kreiselpumpe 3 verändert, vor allem angehoben werden. Dies ist erforderlich, wenn im hydraulischen System 4 ein Rückflussverhinder vorhanden ist, dessen Öffnungsdruck über der dem unteren Zielpunkt $Z_U$ zugeordneten Förderhöhe $H_{ZU}$ liegt. Erreicht der Betriebspunkt $B_{akt}$ der Kreiselpumpe 3 den unteren Zielpunkt $Z_U$, liegt die Förderhöhe bzw. der von der Pumpe 3 bei dieser Förderhöhe aufgebaute Differenzdruck unterhalb des Öffnungsdrucks des Rückflussverhinderers. Dieser würde dann schließen und nie wieder öffnen. Um dies zu verhindern, wird der untere Zielpunkt $Z_U$ angehoben, beispielsweise um 5% der maximalen Förderhöhe $H_{max,Max}$ auf der maximalen Pumpenkurve 11. Es gilt dann $H_{ZU} = H_{ZU\_old} + 0{,}05 \cdot H_{max,Max}$.

Das Anheben erfolgt dann, wenn der Volumenstrom $Q_{akt}$ für einen bestimmten Zeitraum unter einem vorgegebenen Grenzwert liegt. Durch diesen Grenzwert wird die Existenz des Rückflussverhinderers geprüft. Der Grenzwert kann bei 1% des maximalen Volumenstroms $Q_{max,Max}$ auf der maximalen Pumpenkurve liegen, der Zeitraum 30 Minuten betragen.

Mit dem hier beschriebenen Verfahren wird der Betrieb einer beliebigen elektromotorisch angetriebenen Kreiselpumpe, insbesondere einer Heizungspumpe, unter Verwendung einer Mitkopplung zwischen Volumenstromänderung und Sollförderhöhe mit bei jedem Lastzustand optimalem Verstärkungsfaktor möglich.

**Patentansprüche**

1. Verfahren zum Betreiben einer elektromotorisch angetriebenen Kreiselpumpe (3) in einem hydraulischen System (4) mit wenigstens einem selbstgeregelten Verbraucher, bei dem ein Gradient ($dQ_{akt}$/dt) des Volumenstroms ($Q_{akt}$)

der Kreiselpumpe (3) ermittelt und die aktuelle Sollförderhöhe ($H_{\_soll}$) der Kreiselpumpe (3) aus einer mathematischen Verknüpfung des mit einem Verstärkungsfaktor (K) gewichteten Gradienten ($dQ_{akt}/dt$) und der zuletzt vorgegebenen Sollförderhöhe ($H_{soll,alt}$) berechnet wird, wobei die Verknüpfung eine Mitkopplung zwischen Sollförderhöhe ($H_{soll}$) und Volumenstrom ($Q_{akt}$) beschreibt und der Verstärkungsfaktor (K) aus einer Berechnungsvorschrift ermittelt wird, **dadurch gekennzeichnet, dass** die Berechnungsvorschrift dynamisch im Betrieb der Kreiselpumpe (3) unter Verwendung des aktuellen Volumenstroms ($Q_{akt}$) und der aktuellen Förderhöhe ($H_{akt}$) als aktuellen Betriebspunkt ($B_{akt}$) der Kreiselpumpe (3) im Pumpenkennfeld und der Steilheit oder eines Punktes einer aktuellen und/ oder vergangenen Anlagenkennlinie (12, 13) des hydraulischen Systems (4) angepasst wird.

2. Verfahren nach Anspruch 1, **dadurch gekennzeichnet, dass** die mathematische Verknüpfung die Addition des mit dem Verstärkungsfaktor (K) gewichteten Gradienten ($dQ_{akt}/dt$) zu der zuletzt vorgegebenen Sollförderhöhe ($H_{soll,alt}$) ist.

3. Verfahren nach Anspruch 1 oder 2, **dadurch gekennzeichnet, dass** die Berechnungsvorschrift einen funktionalen Zusammenhang zwischen dem aktuellen Betriebspunkt ($B_{akt}$) und einem Zielpunkt ($Z_O$, $Z_U$) beschreibt, wobei der aktuelle Betriebspunkt ($B_{akt}$) der Kreiselpumpe (3) bestimmt wird und der Verstärkungsfaktor (K) aus dem funktionalen Zusammenhang berechnet wird.

4. Verfahren nach Anspruch 3, **dadurch gekennzeichnet, dass** die Steigung einer Peilgeraden (*15,* 16) zwischen dem aktuellen Betriebspunkt ($B_{akt}$) und dem Zielpunkt ($Z_O$, $Z_U$) ermittelt und als Verstärkungsfaktor (*K*) verwendet wird.

5. Verfahren nach Anspruch 3 oder 4, **dadurch gekennzeichnet, dass** der Zielpunkt ($Z_O$) bei einem positiven Gradienten ($dQ_{akt}/dt$) ein oberer Zielpunkt ($Z_O$) ist, der durch einen Volumenstrom ($Q_{ZO}$) größer als der Volumenstrom ($Q_{akt}$) des aktuellen Betriebspunktes ($B_{akt}$) gekennzeichnet ist.

6. Verfahren nach einem der Ansprüche 3 bis 5, **dadurch gekennzeichnet, dass** der Zielpunkt ($Z_U$) bei einem negativen Gradienten ($dQ_{akt}/dt$) ein unterer Zielpunkt ($Z_U$) ist, der durch einen Volumenstrom ($Q_{ZU}$) kleiner als der Volumenstrom ($Q_{akt}$) des aktuellen Betriebspunktes ($B_{akt}$) gekennzeichnet ist.

7. Verfahren nach Anspruch 5 und 6, **dadurch gekennzeichnet, dass** ein erster Verstärkungsfaktor ($K_{up}$) ermittelt wird, der der Steigung einer ersten Peilgeraden (15) zwischen dem aktuellen Betriebspunkt ($B_M$) und dem oberen Zielpunkt ($Z_O$) entspricht, und ein zweiter Verstärkungsfaktor ($K_{down}$) ermittelt wird, der der Steigung einer zweiten Peilgeraden (16) zwischen dem aktuellen Betriebspunkt ($B_{akt}$) und dem unteren Zielpunkt ($Z_U$) entspricht, wobei der erste Verstärkungsfaktor ($K_{up}$) bei einem positiven Gradienten ($dQ_{akt}/dt$) und der zweite Verstärkungsfaktor ($K_{down}$) bei einem negativen Gradienten ($dQ_{akt}/dt$) verwendet wird.

8. Verfahren nach einem der Ansprüche 3 bis 7, **dadurch gekennzeichnet, dass** eine aktuelle und/ oder vergangene Anlagenkennlinie (12, 13) des hydraulischen Systems (4) ermittelt und ein Punkt auf dieser Anlagenkennlinie bestimmt wird, der den oberen Zielpunkt ($Z_O$) bildet.

9. Verfahren nach Anspruch 8, **dadurch gekennzeichnet, dass** der Schnittpunkt zwischen der aktuellen oder vergangenen Anlagenkennlinie (*12, 13* ) und der maximalen Pumpenkurve (11) der Kreiselpumpe (3) ermittelt und als oberer Zielpunkt ($Z_O$) verwendet wird.

10. Verfahren nach einem der Ansprüche 8 bis 9, **dadurch gekennzeichnet,
    dass** die vergangene Anlagenkennlinie (13) diejenige ist, die innerhalb eines vergangenen Bezugszeitraums (T) am flachsten ist.

11. Verfahren nach Anspruch 10, **dadurch gekennzeichnet, dass** der Bezugszeitraum (T) zwischen 12 und 48 Stunden, vorzugsweise 24 Stunden beträgt, insbesondere ein gleitender Bezugszeitraum (T) ist.

12. Verfahren nach Anspruch 3 bis 12, **dadurch gekennzeichnet, dass** der Zielpunkt ($Z_U$) oder der untere Zielpunkt (Zu) auf der minimalen Pumpenkurve (10) der Kreiselpumpe (3) liegt.

13. Verfahren nach einem der Ansprüche 3 bis 12, **dadurch gekennzeichnet, dass** der Zielpunkt ($Z_U$) oder der untere Zielpunkt ($Z_U$) der bei einem Volumenstrom (*Q*) null auf der minimalen Pumpenkurve (*11*) der Kreiselpumpe (3) liegende Betriebspunkt ist.

**14.** Verfahren nach einem der vorherigen Ansprüche und zumindest nach Anspruch 5, **dadurch gekennzeichnet, dass** der Verstärkungsfaktor ($K$) oder der erste Verstärkungsfaktor ($K_{up}$) im Falle eines positiven Gradienten ($dQ_{akt}/dt$) nach der Berechnungsvorschrift

$$K_{up} = \frac{H_{ZO} - H_{akt}}{Q_{ZO} - Q_{akt}}$$

berechnet wird, wobei

$K_{up}$ der Verstärkungsfaktor bzw. erste Verstärkungsfaktor,
$H_{ZO}$ die dem oberen Zielpunkt zugeordnete Förderhöhe,
$H_{akt}$ die dem aktuellen Betriebspunkt zugeordnete Förderhöhe,
$Q_{ZO}$ der dem oberen Zielpunkt zugeordnete Volumenstrom,
$Q_{akt}$ der dem aktuellen Betriebspunkt zugeordnete Volumenstrom

ist.

**15.** Verfahren nach einem der vorherigen Ansprüche und zumindest nach Anspruch 6, **dadurch gekennzeichnet, dass** der Verstärkungsfaktor ($K$) oder der zweite Verstärkungsfaktor ($K_{down}$) im Falle eines negativen Gradienten ($dQ_{akt}/dt$) nach der Berechnungsvorschrift

$$K_{down} = \frac{H_{akt} - H_{ZU}}{Q_{akt} - Q_{ZU}}$$

berechnet wird, wobei

$K_{down}$ der Verstärkungsfaktor bzw. der zweite Verstärkungsfaktor,
$H_{ZU}$ die dem unteren Zielpunkt zugeordnete Förderhöhe,
$H_{akt}$ die dem aktuellen Betriebspunkt zugeordnete Förderhöhe,
$Q_{ZU}$ die dem unteren Zielpunkt zugeordnete Volumenstrom,
$Q_{iakt}$ die dem aktuellen Betriebspunkt zugeordnete Volumenstrom

ist.

**16.** Verfahren nach einem der vorherigen Ansprüche, **dadurch gekennzeichnet, dass** es zyklisch wiederholt wird, vorzugsweise in Intervallen zwischen 3 Sekunden und 15 Minuten, insbesondere alle 30 Sekunden.

**17.** Verfahren nach einem der Ansprüche 3 bis 16, **dadurch gekennzeichnet, dass** der berechnete Verstärkungsfaktor ($K$, $K_{UP}$, $K_{DOWN}$) auf einen Maximalwert ($K_{max}$) begrenzt wird, der der Steigung einer Geraden (16) zwischen einem unteren und einem oberen Grenzpunkt entspricht, wobei der untere Grenzpunkt auf oder unterhalb der minimalen Pumpenkurve (10) und der obere Grenzpunkt auf oder oberhalb der maximalen Pumpenkurve (11) der Kreiselpumpe (3) liegt.

**18.** Verfahren nach Anspruch 17, **dadurch gekennzeichnet, dass** der obere Grenzpunkt durch den Schnittpunkt zwischen der maximalen Pumpenkurve (11) und der steilsten Anlagenkennlinie (17) des hydraulischen Systems (4) gebildet ist.

**19.** Verfahren nach Anspruch 17, **dadurch gekennzeichnet, dass** der obere Grenzpunkt definiert ist durch die maximale Förderhöhe ($H_{max,\,Max}$) auf der maximalen Pumpenkurve (11) und 10% bis 20% des maximalen Volumenstroms ($Q_{max,Max}$) auf der maximalen Pumpenkurve (11).

**20.** Verfahren nach einem der Ansprüche 3 bis 19, **dadurch gekennzeichnet, dass** der berechnete Verstärkungsfaktor ($K$, $K_{UP}$, $K_{DOWN}$) auf einen Minimalwert ($K_{min}$) von null begrenzt wird.

21. Verfahren nach einem der Ansprüche 3 bis 20, **dadurch gekennzeichnet, dass** der berechnete Verstärkungsfaktor (K, $K_{UP}$, $K_{DOWN}$) auf den letzten nicht-negativen Wert gesetzt wird, wenn der berechnete Wert des Verstärkungsfaktors (K, $K_{UP}$, $K_{DOWN}$) negativ ist.

22. Verfahren nach einem der vorherigen Ansprüche, **dadurch gekennzeichnet, dass** zur Bestimmung des aktuellen Betriebspunktes ($B_{akt}$) der aktuelle Volumenstrom ($Q_{akt}$) bestimmt wird, wobei ein neu bestimmter Volumenstromwert auf den letzten bestimmten Volumenstromwert zurückgesetzt wird, wenn der neu bestimmte Volumenstromwert größer als der maximale Volumenstrom ($Q_{max,Max}$) auf der maximalen Pumpenkurve (11) ist.

23. Verfahren nach einem der vorherigen Ansprüche, **dadurch gekennzeichnet, dass** der Gradient ($dQ_{akt}$/dt) aus einer Anzahl gleitend gemittelten Volumenstromwerten ($Q_{akt}$) berechnet wird.

24. Verfahren nach einem der vorherigen Ansprüche, **dadurch gekennzeichnet, dass** der Gradient ($dQ_{akt}$/dt) über eine bestimmte Anzahl von Werten gleitend gemittelt wird.

25. Verfahren nach einem der Ansprüche 5 bis 24, **dadurch gekennzeichnet, dass** der untere Zielpunkt ($Z_U$) auf eine höhere Förderhöhe ($H_{U,neu}$), insbesondere um 2% bis 8% der maximalen Förderhöhe ($H_{max,Max}$) auf der maximalen Pumpenkurve (11) angehoben wird, wenn der Volumenstrom ($Q_{akt}$) für einen bestimmten Zeitraum unter einem vorgegebenen Grenzwert (Qmin), insbesondere unter 0,1% des maximalen Volumenstroms ($Q_{max,Max}$) auf der maximalen Pumpenkurve (11) liegt.

**Claims**

1. Method for the operation of an electric motor driven centrifugal pump (3) in a hydraulic system (4) having at least one self-controlled load, wherein a gradient ($dQ_{akt}$/dt) of the volumetric flow rate ($Q_{akt}$) of the centrifugal pump (3) is determined and the current setpoint delivery head ($H_{\_soll}$) of the centrifugal pump (3) is calculated from a mathematical operation on the gradient ($dQ_{akt}$/dt) weighted with a gain factor (K) and the last specified setpoint delivery head ($H_{soll,alt}$), in which the operation describes a positive feedback between the setpoint delivery head ($H_{soll}$) and the volumetric flow rate ($Q_{akt}$), and the gain factor (K) is determined from a calculation rule, **characterised by** the calculation rule being dynamically adjusted during the operation of the centrifugal pump (3) using the current volume flow ($Q_{akt}$) and the current delivery head ($H_{akt}$) as the current operating point ($B_{akt}$) of the centrifugal pump (3) in the pump performance map and the slope or a point of a current and/or past system characteristic curve (12, 13) of the hydraulic system (4).

2. Method according to claim 1, **characterised by** the mathematical operation being the addition of the gradient ($dQ_{akt}$/dt) weighted with the gain factor (K) to the most recent specified setpoint delivery head ($H_{soll,alt}$).

3. Method according to claim 1 or 2, **characterised by** the calculation rule describing a functional relationship between the current operating point ($B_{akt}$) and a target point ($Z_O$, $Z_U$), in which the current operating point ($B_{akt}$) of the centrifugal pump (3) is determined and the gain factor (K) is calculated from the functional relationship.

4. Method according to claim 3, **characterised by** the slope of a straight line (*15, 16*) between the current operating point ($B_{akt}$) and the target point ($Z_O$, $Z_U$) being determined and used as the gain factor (*K*).

5. Method according to claim 3 or 4, **characterised by** the target point ($Z_O$) with a positive gradient ($dQ_{akt}$/dt) being an upper target point ($Z_O$) **characterised by** a volume flow ($Q_{ZO}$) greater than the volume flow ($Q_{akt}$) of the current operating point ($B_{akt}$).

6. Method according to one of the claims 3 through 5, **characterised by** the target point ($Z_U$) with a negative gradient ($dQ_{akt}$/dt) being a lower target point ($Z_U$) **characterised by** a volume flow ($Q_{ZU}$) less than the volume flow ($Q_{akt}$) of the current operating point ($B_{akt}$).

7. Method according to claims 5 and 6, **characterised by** a first gain factor ($K_{up}$) being determined, corresponding to the slope of a first straight line (15) between the current operating point ($B_M$) and the upper target point ($Z_O$), and a second gain factor ($K_{down}$) being determined, corresponding to the slope of a second straight line (*16*) between the current operating point ($B_{akt}$) and the lower target point ($Z_U$), in which the first gain factor ($K_{up}$) is used with a positive gradient ($dQ_{akt}$/dt) and the second gain factor ($K_{down}$) is used with a negative gradient ($dQ_{akt}$/dt).

8.  Method according to one of the claims 3 through 7, **characterised by** a current and/or past system characteristic curve (12, 13) of the hydraulic system (4) being determined and a point on this system characteristic curve being defined, forming the upper target point ($Z_O$).

9.  Method according to claim 8, **characterised by** the intersection between the current or past system characteristic curve (12, 13 ) and the maximum pump curve (11) of the centrifugal pump (3) being determined and used as the upper target point ($Z_O$).

10. Method according to one of the claims 8 through 9, **characterised by** the past system characteristic curve (13) being the one that is flattest within a past reference time period (T).

11. Method according to claim 10, **characterised by** the reference time period (T) being between 12 and 48 hours, preferably 24 hours, and notably being a moving reference time period (T).

12. Method according to claims 3 through 12, **characterised by** the target point ($Z_U$) or the lower target point ($Z_U$) lying on the minimum pump curve (10) of the centrifugal pump (3).

13. Method according to one of the claims 3 through 12, **characterised by** the target point ($Z_U$) or the lower target point ($Z_U$) being the operating point that, at a volume flow ($Q$) of zero, lies on the minimum pump curve (*11*) of the centrifugal pump (3).

14. Method according to one of the preceding claims and at least according to claim 5, **characterised by** the gain factor ($K$) or the first gain factor ($K_{up}$) in case of a positive gradient ($dQ_{akt}/dt$) being calculated according to the calculation rule

$$K_{up} = \frac{H_{ZO} - H_{akt}}{Q_{ZO} - Q_{akt}}$$

where

$K_{up}$ is the gain factor or the first gain factor,
$H_{ZO}$ is the delivery head assigned to the upper target point,
$H_{akt}$ is the delivery head assigned to the current operating point,
$Q_{ZO}$ is the volume flow assigned to the upper target point,
$Q_{akt}$ is the volume flow assigned to the current operating point.

15. Method according to one of the preceding claims and at least according to claim 6, **characterised by** the gain factor ($K$) or the second gain factor ($K_{down}$) in case of a negative gradient ($dQ_{akt}/dt$) being calculated according to the calculation rule

$$K_{down} = \frac{H_{akt} - H_{ZU}}{Q_{akt} - Q_{ZU}}$$

where

$K_{down}$ is the gain factor or the second gain factor,
$H_{ZU}$ is the delivery head assigned to the lower target point,
$H_{akt}$ is the delivery head assigned to the current operating point,
$Q_{ZU}$ is the volume flow assigned to the lower target point,
$Q_{iakt}$ is the volume flow assigned to the current operating point.

16. Method according to one of the preceding claims, **characterised by** cyclical repetition, preferably at intervals between 3 seconds and 15 minutes, notably every 30 seconds.

17. Method according to one of the claims 3 through 16, **characterised by** the calculated gain factor ($K$, $K_{UP}$, $K_{DOWN}$)

being limited to a maximum value ($K_{max}$), corresponding to the slope of a straight line (16) between a lower and an upper end point, in which the lower end point lies on or below the minimum pump curve (10) and the upper end point lies on or above the maximum pump curve (11) of the centrifugal pump (3).

18. Method according to claim 17, **characterised by** the upper end point being formed by the intersection of the maximum pump curve (11) and the steepest system characteristic curve (17) of the hydraulic system (4).

19. Method according to claim 17, **characterised by** the upper end point being defined by the maximum delivery head (Hmax, $_{Max}$) on the maximum pump curve (11) and 10% to 20% of the maximum volume flow ($Q_{max,Max}$) on the maximum pump curve (11).

20. Method according to one of the claims 3 through 19, **characterised by** the calculated gain factor (K, $K_{UP}$, $K_{DOWN}$) being limited to a minimum value ($K_{min}$) of zero.

21. Method according to one of the claims 3 through 20, **characterised by** the calculated gain factor (K, $K_{UP}$, $K_{DOWN}$) being set to the last non-negative value when the calculated value of the gain factor (K, $K_{UP}$, $K_{DOWN}$) is negative.

22. Method according to one of the preceding claims, **characterised by** the current volume flow ($Q_{akt}$) being determined for the determination of the current operating point ($B_{akt}$), in which a newly determined volume flow value is reset to the last determined volume flow value when the newly determined volume flow value is greater than the maximum volume flow ($Q_{max,Max}$) on the maximum pump curve (11).

23. Method according to one of the preceding claims, **characterised by** the gradient ($dQ_{akt}/dt$) being calculated from a number of moving average volume flow values ($Q_{akt}$).

24. Method according to one of the preceding claims, **characterised by** the gradient ($dQ_{akt}/dt$) being determined as the moving average of a certain number of values.

25. Method according to one of the claims 5 through 24, **characterised by** the lower target point (Zu) being increased to a higher delivery head ($H_{U,neu}$), notably by 2% to 8% of the maximum delivery head ($H_{max,Max}$) on the maximum pump curve (11) when the volume flow ($Q_{akt}$) lies below a specified limit value (Qmin) for a defined period of time, notably below 0.1% of the maximum volume flow ($Q_{max,Max}$) on the maximum pump curve (11).

**Revendications**

1. Procédé de fonctionnement d'une pompe centrifuge (3) à moteur électrique dans un système hydraulique (4) avec au moins un consommateur autorégulé, dans lequel on détermine un gradient ($dQ_{akt}/dt$) du débit volumique ($Q_{akt}$) de la pompe centrifuge (3) et on calcule la hauteur manométrique nominale actuelle ($H_{\_soll}$) de la pompe centrifuge (3) à partir d'une combinaison mathématique du gradient ($dQ_{akt}/dt$) pondéré par un facteur d'amplification (K) et de la dernière hauteur manométrique nominale ($H_{soll,alt}$) prédéfinie, sachant que la combinaison décrit un couplage entre la hauteur manométrique nominale ($H_{soll}$) et le débit volumique ($Q_{akt}$) et que le facteur d'amplification (K) est déterminé à partir d'une règle de calcul, **caractérisé en ce que** la règle de calcul est adaptée de manière dynamique pendant le fonctionnement de la pompe centrifuge (3) en utilisant le débit volumique actuel ($Q_{akt}$) et la hauteur manométrique actuelle ($H_{akt}$) comme point de fonctionnement actuel ($B_{akt}$) de la pompe centrifuge (3) dans le champ caractéristique de la pompe et la pente ou un point d'une courbe caractéristique de l'installation actuelle et/ou passée (12, 13) du système hydraulique (4).

2. Procédé selon la revendication 1, **caractérisé en ce que** la combinaison mathématique consiste en l'addition du gradient ($dQ_{akt}/dt$) pondéré par le facteur d'amplification (K) à la dernière hauteur manométrique nominale prédéfinie ($H_{soll,alt}$).

3. Procédé selon la revendication 1 ou 2, **caractérisé en ce que** la règle de calcul décrit une relation fonctionnelle entre le point de fonctionnement actuel ($B_{akt}$) et un point cible (Zo, Zu), sachant que le point de fonctionnement actuel ($B_{akt}$) de la pompe centrifuge (3) est déterminé et le facteur d'amplification (K) calculé à partir de la relation fonctionnelle.

4. Procédé selon la revendication 3, **caractérisé en ce que** la pente d'une ligne de repère (15, 16) est déterminée entre le point de fonctionnement actuel ($B_{akt}$) et le point cible ($Z_O$, $Z_U$) et est utilisée comme facteur d'amplification ($K$).

5. Procédé selon la revendication 3 ou 4, **caractérisé en ce que** le point cible (Zo) pour un gradient positif (d$Q_{akt}$/dt) est un point cible supérieur (Zo) **caractérisé par le fait qu'**un débit volumique (Qzo) est plus grand que le débit volumique ($Q_{akt}$) du point de fonctionnement actuel ($B_{akt}$).

6. Procédé selon l'une des revendications 3 à 5, **caractérisé en ce que** le point cible (Zu) pour un gradient négatif (d$Q_{akt}$/dt) est un point cible inférieur (Zu) **caractérisé par le fait qu'**un débit volumique (Qzu) est plus petit que le débit volumique ($Q_{akt}$) du point de fonctionnement actuel ($B_{akt}$).

7. Procédé selon la revendication 5 ou 6, **caractérisé en ce que** sont déterminés un premier facteur d'amplification ($K_{up}$) correspondant à la pente d'une première ligne de repère (15) entre le point de fonctionnement actuel ($B_M$) et le point cible supérieur (Zo), et un second facteur d'amplification ($K_{down}$) correspondant à la pente d'une seconde ligne de repère (16) entre le point de fonctionnement actuel ($B_{akt}$) et le point cible inférieur (Zu), sachant que le premier facteur d'amplification ($K_{up}$) est utilisé en cas de gradient positif (d$Q_{akt}$/dt) et le second facteur d'amplification ($K_{down}$) est utilisé en cas de gradient négatif (d$Q_{akt}$/dt).

8. Procédé selon l'une des revendications 3 à 7, **caractérisé en ce que** sont déterminés une courbe caractéristique de l'installation actuelle et/ou passée (12, 13) du système hydraulique (4) et un point sur cette courbe caractéristique de l'installation, formant le point cible supérieur (Zo).

9. Procédé selon la revendication 8, **caractérisé en ce que** l'intersection de la courbe caractéristique de l'installation actuelle ou passée *(*12, 13 *)* et la courbe de pompage maximale (11) de la pompe centrifuge (3) est déterminé et utilisé comme point cible supérieur (Zo).

10. Procédé selon l'une des revendications 8 à 9, **caractérisé en ce que** la courbe caractéristique de l'installation passée (13) est la courbe la plus plate sur une période de référence passée (T).

11. Procédé selon la revendication 10, **caractérisé en ce que** la période de référence (T) dure entre 12 et 48 heures, de préférence 24 heures, et est en particulier une période de référence mobile (T).

12. Procédé selon les revendications 3 à 12, **caractérisé en ce que** le point cible (Zu) ou le point cible inférieur (Zu) se situe sur la courbe de pompage minimale (10) de la pompe centrifuge (3).

13. Procédé selon les revendications 3 à 12, **caractérisé en ce que** le point cible (Zu) ou le point cible inférieur (Zu) se situant pour un débit (Q) nul sur la courbe de pompage minimale (11) de la pompe centrifuge (3) est un point de fonctionnement.

14. Procédé selon l'une des revendications précédentes et au moins selon la revendication 5, **caractérisé en ce que** le facteur d'amplification (K) ou le premier facteur d'amplification ($K_{up}$) en cas de gradient positif (d$Q_{akt}$/dt) est calculé en fonction de la règle de calcul, sachant que

$$K_{up} = \frac{H_{ZO} - H_{akt}}{Q_{ZO} - Q_{akt}}$$

$K_{up}$ est le facteur d'amplification ou le premier facteur d'amplification,
$H_{ZO}$ est la hauteur manométrique associée au point cible supérieur,
$H_{akt}$ est la hauteur manométrique associée au point de fonctionnement actuel,
$Q_{ZO}$ est le débit volumique associé au point cible supérieur,
$Q_{akt}$ est le débit volumique associé au point de fonctionnement actuel,.

15. Procédé selon l'une des revendications précédentes et au moins selon la revendication 6, **caractérisé en ce que** le facteur d'amplification (K) ou le second facteur d'amplification ($K_{down}$) en cas de gradient positif (d$Q_{akt}$/dt) est calculé en fonction de la règle de calcul, sachant que

$$K_{down} = \frac{H_{akt} - H_{ZU}}{Q_{akt} - Q_{ZU}}$$

$K_{down}$ est le facteur d'amplification ou le second facteur d'amplification,

$H_{ZU}$ est la hauteur manométrique associée au point cible inférieur,

$H_{akt}$ est la hauteur manométrique associée au point de fonctionnement actuel,

$Q_{ZU}$ est le débit volumique associé au point cible inférieur,

$Q_{iakt}$ est le débit volumique associé au point au point de fonctionnement actuel,.

**16.** Procédé selon l'une des revendications précédentes, **caractérisé en ce qu'**il est répété de façon cyclique, de préférence par intervalles entre 3 secondes et 15 minutes, en particulier toutes les 30 secondes.

**17.** Procédé selon l'une des revendications 3 à 16, **caractérisé en ce que** le facteur d'amplification calculé (K, $K_{UP}$, $K_{DOWN}$) est limité à une valeur maximale ($K_{max}$) correspondant à la pente d'une courbe (16) entre un point limite inférieur et un point limite supérieur, sachant que le point limite inférieur est situé sur ou sous la courbe de pompage minimale (10) et le point limite supérieur est situé sur ou au-dessus de la courbe de pompage maximale (11) de la pompe centrifuge (3).

**18.** Procédé selon la revendication 17, **caractérisé en ce que** le point limite supérieur est formé par l'intersection de la courbe de pompage maximale (11) et la courbe caractéristique de l'installation la plus pentue (17) du système hydraulique (4).

**19.** Procédé selon la revendication 17, **caractérisé en ce que** le point limite supérieur est défini par la hauteur manométrique maximale ($H_{max,\ Max}$) sur la courbe de pompage maximale (11) et 10% à 20% du débit volumique ($Q_{max,Max}$) sur la courbe de pompage maximale (11).

**20.** Procédé selon l'une des revendications 3 à19, **caractérisé en ce que** le facteur d'amplification calculé (K, $K_{UP}$, $K_{DOWN}$) est limité par une valeur minimale (Kmin) nulle.

**21.** Procédé selon l'une des revendications 3 à 20, **caractérisé en ce que** le facteur d'amplification calculé (K, $K_{UP}$, $K_{DOWN}$) est fixé à la dernière valeur non négative si la valeur calculée du facteur d'amplification (K, $K_{UP}$, $K_{DOWN}$) est négative.

**22.** Procédé selon l'une des revendications précédentes, **caractérisé en ce que**, pour déterminer le point de fonctionnement actuel ($B_{akt}$), le débit volumique actuel ($Q_{akt}$) est déterminé, sachant qu'une nouvelle valeur de débit volumique déterminée est ramenée à la dernière valeur de débit volumique déterminée si la nouvelle valeur de débit volumique déterminée est supérieure au débit volumique maximal ($Q_{max,Max}$) sur la courbe de pompage maximale (11).

**23.** Procédé selon l'une des revendications précédentes, **caractérisé en ce que** la moyenne glissante du gradient ($dQ_{akt}/dt$) est calculée sur un certain nombre de valeurs de débit volumique ($Q_{akt}$).

**24.** Procédé selon l'une des revendications précédentes, **caractérisé en ce que** la moyenne glissante du gradient ($dQ_{akt}/dt$) est calculée sur un certain nombre de valeurs.

**25.** Procédé selon l'une des revendications 5 à 24, **caractérisé en ce que** le point cible inférieur (Zu) est relevé à une hauteur manométrique plus élevée ($H_{U,neu}$), en particulier entre 2% et 8% de la hauteur manométrique maximale ($H_{max,Max}$) sur la courbe de pompage maximale (11), lorsque le débit volumique ($Q_{akt}$) est, pendant une période déterminée, inférieur à une valeur limite (Qmin), plus particulièrement 0,1% du débit volumique maximale ($Q_{max,Max}$) sur la courbe de pompage maximale (11).

**Fig. 1**

**Fig. 2**

EP 3 230 593 B1

```
            ┌─────────────────────────────────┐
       20 ──┤   Aktueller Betriebspunkt       │◄──────────┐
            │        B_akt(Q_akt, H_akt)       │           │
            └────────────────┬────────────────┘           │
                             │                             │
                             ▼                             │
            ┌─────────────────────────────────┐           │
       30 ──┤          Berechnung              │           │
            │  Volumenstromgradient dQ_akt/dt  │           │
            └────────────────┬────────────────┘           │
                             │                             │
                             ▼                             │
    ┌───────────────────────────────────────────────────┐ │
50 ─┤  Berechnung des idealen Verstärkungsfaktors K aus  │ │
    │         angepasster Berechnungsvorschrift          │ │
    └─────────────────────────┬─────────────────────────┘ │
                              │                            │
                              ▼                            │
    ┌───────────────────────────────────────────────────┐ │
    │ Anpassung der Sollförderhöhe H_soll in Abhängigkeit│ │
60 ─┤  des Volumenstromgradienten dQ_akt/dt und des      │ │
    │            Verstärkungsfaktors K                   │ │
    └─────────────────────────┬─────────────────────────┘ │
                              │                            │
                              ▼                            │
              ┌─────────────────────────────┐             │
         70 ──┤     Sollförderhöhe H_soll    │─────────────┘
              └─────────────────────────────┘
```

Fig. 3

```
                    ┌─────────────────────────────┐
              20  ⌇ │    Aktueller Betriebspunkt   │ ◄─────────────┐
                    │      B_akt(Q_akt, H_akt)      │               │
                    └──────────────┬──────────────┘                │
                                   │                               │
                                   ▼                               │
                    ┌─────────────────────────────┐                │
              30  ⌇ │          Berechnung          │                │
                    │  Volumenstromgradient dQ_akt/dt │             │
                    └──────────────┬──────────────┘                │
                                   │                               │
                                   ▼                               │
         ┌──────────────────────────────────────────────────┐     │
   40  ⌇ │          Bestimme oberen Zielpunkt Z_O           │     │
         └──────────────────────┬──────────────────────────┘     │
                                │                                 │
                                ▼                                 │
         ┌──────────────────────────────────────────────────┐    │
         │ Berechnung Verstärkungsfaktor K aus aktuellem     │    │
         │ Betriebspunkt B_akt                               │    │
   50  ⌇ │ und oberem Zielpunkt Z_O(Q_O, H_O)                │    │
         │ oder unterem Zielpunkt Z_U(Q_U, H_U)              │    │
         └──────────────────────┬──────────────────────────┘    │
                                │                                │
                                ▼                                │
         ┌──────────────────────────────────────────────────┐   │
         │ Anpassung der Sollförderhöhe H_soll in Abhängigkeit│   │
   60  ⌇ │ des Volumenstromgradienten dQ_akt/dt und des      │   │
         │ Verstärkungsfaktors K                             │   │
         └──────────────────────┬──────────────────────────┘   │
                                │                               │
                                ▼                               │
              ┌────────────────────────────────────┐           │
        70  ⌇ │       Sollförderhöhe H_soll        │ ──────────┘
              └────────────────────────────────────┘
```

Fig. 4

$$dQ_{akt}/dt > 0$$

Ja — Nein

$$K_{up} = \frac{H_{ZO} - H_{akt}}{Q_{ZO} - Q_{akt}}$$

$$K_{down} = \frac{H_{akt} - H_{ZU}}{Q_{akt} - Q_{ZU}}$$

K = Kup

K = Kdown

$$H_{soll} = H_{soll,alt} + K \cdot dQ_{akt}/dt$$

$$H_{soll}$$

Fig. 5

EP 3 230 593 B1

Aktueller Betriebspunkt
$B_{akt}(Q_{akt}, H_{akt})$

20

Berechnung Volumenstromgradient $dQ_{akt}/dt$

30

50

Ja      $dQ_{akt}/dt > 0$      Nein

40

Bestimme oberen Zielpunkt $Z_O$

51

52

$$K = \frac{H_{ZO} - H_{akt}}{Q_{ZO} - Q_{akt}}$$

$$K = \frac{H_{akt} - H_{ZU}}{Q_{akt} - Q_{ZU}}$$

54

60

$H_{soll} = H_{soll,alt} + K \cdot dQ_{akt}/dt$

70

Sollförderhöhe $H_{soll}$

Fig. 6

Fig. 7

```
┌─────────────────────────────────────────────────────────────┐
│                                                             │
│              ┌──────────────────────────────────┐           │
│      41      │   Bestimme aktuelle Anlagenkennlinie 14      │
│              └──────────────────────────────────┘           │
│                              │                              │
│                              ▼                              │
│              ┌──────────────────────────────────┐           │
│      42      │  Bestimme Schnittpunkt der Anlagenkennlinie mit│
│              │      maximaler Pumpenkurve 11                 │
│              └──────────────────────────────────┘           │
│                              │                              │
│  40                          ▼                              │
│              ┌──────────────────────────────────┐           │
│              │  Ermittle von allen Schnittpunkten eines vergangenen│
│      43      │   Zeitintervalls T denjenigen mit dem größten │
│              │        Volumenstrom Q_max,T                  │
│              └──────────────────────────────────┘           │
│                              │                              │
│                              ▼                              │
│              ┌──────────────────────────────────┐           │
│      44      │   Ermittle zugehörige Förderhöhe H_max,T      │
│              └──────────────────────────────────┘           │
│                              │                              │
│                              ▼                              │
│              ┌──────────────────────────────────┐           │
│      45      │  Oberer Zielpunkt Z_O : Q_max,T; H_max,T     │
│              └──────────────────────────────────┘           │
│                                                             │
└─────────────────────────────────────────────────────────────┘
```

Fig. 8

Fig. 9

EP 3 230 593 B1

Fig. 10

Fig. 11

EP 3 230 593 B1

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 102011012211 A1